# EUROPÄISCHE PATENTSCHRIFT

(11) **EP 3 865 242 B1**
(45) Veröffentlichungstag und Bekanntmachung des Hinweises auf die Patenterteilung: **06.09.2023**
(21) Anmeldenummer: 20175064.3
(22) Anmeldetag: 15.05.2020
(51) Int. Cl.: B23K 26/03, B23K 26/22, B23K 31/12

(54) **SCHWEISSVERFAHREN UND SCHWEISSVORRICHTUNG ZUM VERSCHWEISSEN VON LEITERENDEN**
WELDING METHOD AND WELDING DEVICE FOR WELDING CONDUCTOR ENDS
PROCÉDÉ DE SOUDAGE ET DISPOSITIF DE SOUDAGE PERMETTANT DE SOUDER DES EXTRÉMITÉS DE CONDUCTEURS

(30) Priorität: 12.02.2020 DE 102020103609
(43) Veröffentlichungstag der Anmeldung: 18.08.2021
(73) Patentinhaber: Grob-Werke GmbH & Co. KG, 87719 Mindelheim (DE)
(72) Erfinder: Hofmann, Konstantin, 87719 Mindelheim (DE); Schürer, René, 86415 Mering (DE)
(74) Vertreter: KASTEL Patentanwälte PartG mbB

(56) Entgegenhaltungen:
- DE-A1-102016 222 385
- US-A1- 2018 079 032
- US-A1- 2019 210 158

## Beschreibung

Die Erfindung betrifft ein Schweißverfahren zum Verschweißen von in Leiterendengruppen gruppierten Leiterenden eines Bauteils für eine elektrische Maschine. Weiter betrifft die Erfindung eine Schweißvorrichtung zum Verschweißen von in Leiterendengruppen gruppierten Leiterenden eines Bauteils für eine elektrische Maschine, wobei die Schweißvorrichtung eine Schweißeinrichtung zum Eintragen von Schweißenergie auf eine Leiterendengruppe umfasst. Insbesondere betrifft die Erfindung ein Verfahren und eine Vorrichtung zum Verschweißen von Leiterenden von Leiterendengruppen, insbesondere Leiterendenpaaren (im Folgenden auch Pinpaar genannt), eines Bauteils für eine elektrische Maschine, insbesondere eines Stators eines als Fahrmotor für ein Elektrofahrzeug ausgebildeten Elektromotors.

Unter elektrischen Maschinen werden insbesondere Maschinen zum Umwandeln elektrischer Energie in Bewegungsenergie und Maschinen zum Umwandeln von Bewegungsenergie in elektrische Energie verstanden. Insbesondere sind darunter Elektromotoren und Generatoren zu verstehen.

Bei der Herstellung von Bauteilen derartiger elektrischer Maschinen, wie beispielsweise Statoren oder Rotoren, ist es oft erforderlich, Enden von aus Drähten gebildeten Leitern gemeinsam zu verarbeiten, wie z.B. gemeinsam zu schneiden oder zu formen, und miteinander zu verbinden.

Zum Beispiel gibt es Elektromotoren, bei denen Spulenwicklungen, insbesondere des Stators, aus unterschiedlichen Drahtstücken gebildet werden, deren Enden dann miteinander verbunden werden. Es sind bereits Vorrichtungen und Verfahren zum Verbinden von Drahtenden von Hairpins zum Bilden von Statorwicklungen von elektrischen Maschinen vorgeschlagen worden, bei denen die Drahtenden miteinander verschweißt werden. Hierbei sind Vorrichtungen und Verfahren zum Positionieren und Verspannen der Drahtenden vor dem Verschweißen und Vorrichtungen und Verfahren zum Verschweißen der so gespannten Drahtenden vorgesehen.

Ein bevorzugtes Einsatzgebiet der vorliegenden Erfindung liegt auf dem Gebiet der Herstellung von Elektromotoren oder sonstigen elektrischen Maschinen, wie beispielsweise Generatoren, die für hohe Leistungen, zuverlässigen Betrieb und hohe Effizienz ausgelegt sind. Insbesondere sollen Elektromotoren hergestellt werden, die als Fahrmotoren von Elektrofahrzeugen oder Hybridfahrzeugen einsetzbar sind und beispielsweise eine Nennleistung zwischen 20 kW und 400 kW aufweisen.

Für dieses bevorzugte Einsatzgebiet werden in den folgenden Literaturstellen
[1] DE 10 2018 103 926 A1
[2] DE 10 2018 103 929 A1
[3] DE 10 2018 103 930 A1
   auf die für weitere Einzelheiten ausdrücklich verwiesen wird, Vorrichtungen und Verfahren zum Umformen von Drahtenden von Hairpins und ein Herstellverfahren für ein Bauteil einer elektrischen Maschine unter Verwendung derselben beschrieben. Die in den Literaturstellen beschriebenen Vorrichtungen und Verfahren dienen insbesondere zum Umformen der Hairpin-Drahtenden, die miteinander verbunden werden, um so Spulenwicklungen zu bilden. Das Verbinden erfolgt z.B. mittels Schweißens, wozu es vorteilhaft ist, in der Literaturstelle
[4] DE 10 2018 103 100 A1
   auf die für weitere Einzelheiten ausdrücklich verwiesen wird, beschriebene und gezeigte Vorrichtungen und Verfahren zum Positionieren und Spannen der Hairpin-Drahtenden zu verwenden.

Bei einem Bauteil einer elektrischen Maschine lassen sich so durch Verschweißen von Leiterendenpaaren Spulenwicklungen ausbilden. Jede derartige Spulenwicklung funktioniert nur dann, wenn alle ihre Schweißverbindungen technisch in Ordnung sind. Zum Beispiel ist die Funktionsfähigkeit eines Stators nur dann gegeben, wenn alle Schweißverbindungen all seiner Spulenwicklungen technisch in Ordnung sind. Da Statoren für die oben genannten Einsatzzwecke meist mehr als 200 Leiterendenpaare beinhalten, resultiert ein hoher Anspruch an die Schweißnahtqualität, da bereits eine einzelne Verbindung, die nicht in Ordnung ist, ausreicht, dass der gesamte Stator Ausschuss ist.

Aus den Literaturstellen
[5] DE 10 2016 222 385 A1 und
[6] US 2018/0079032 A1
sind Verfahren und Vorrichtungen zum Verschweißen von in Leiterendengruppen gruppierten Leiterenden von Statoren als Bauteile für elektrische Maschinen mittels Laserschweißen bekannt.

Dabei wird bei [5] ein Schweißenergieeintrag abhängig von einem zuvor erfassten Abstand von zu verschweißenden Leiterenden eingebracht, so dass dieser Stand der Technik die Schritte bzw. Merkmale der Oberbegriffe der unabhängigen Ansprüche offenbart.

Bei der Literaturstelle [6] wird durch Erfassen von reflektiertem Licht mit einen Infrarotsensor oder durch Erfassen von durch einen Metalldampf emittierten Lichts mittels eines Optiksensor für sichtbares Licht der Zeitpunkt des Beginns einer Laserenergieabsorption an der Schweißstelle erfasst und abhängig von diesem Zeitpunkt die Zeit der Laserbestrahlung gesteuert.

Die Literaturstelle
[7] US 2019/0210158 A1
betrifft eine Vorrichtung und ein Verfahren zum Überprüfen eines Schweißabschnitts an miteinander verschweißten Leitern von Statoren mittels Bildverarbeitung. Damit wird nach dem vollständigen Schweißen aller Leiter des Stators untersucht, ob die einzelnen Schweißstellen gut oder schlecht sind.

Die Erfindung hat sich zur Aufgabe gestellt, die Herstellung von elektrischen Verbindungen durch Schweißen an Bauteilen einer elektrischen Maschine, die in Großserie zu fertigen ist, hinsichtlich der Prozesssicherheit weiter zu verbessern.

Zum Lösen dieser Aufgabe schafft die Erfindung ein Verfahren und eine Vorrichtung sowie ein Computerprogrammprodukt gemäß den unabhängigen Ansprüchen.

Vorteilhafte Ausgestaltungen sind Gegenstand der Unteransprüche.

Die Erfindung schafft gemäß einem Aspekt davon ein Schweißverfahren zum Verschweißen von in Leiterendengruppen gruppierten Leiterenden eines Bauteils für eine elektrische Maschine, umfassend:
a) Erfassen einer Relativposition eines ersten Leiterendes und eines zweiten Leiterendes einer Leiterendengruppe und
b) Steuern eines Schweißenergieeintrages auf die zu verschweißenden Leiterenden abhängig von der erfassten Relativposition.

Erfindungsgemäß umfasst das Schweißverfahren die Schritte:
c) Erfassen wenigstens eines Größenparameters eines beim Schweißen entstehenden Schmelzbades und
d) Steuern des Schweißenergieeintrages abhängig von dem erfassten Größenparameter des Schmelzbades.

Vorzugsweise umfasst das Schweißverfahren die Schritte:
e) Erfassen wenigstens eines Größenparameters einer nach dem Schweißen erstarrten Schweißperle und
f) Steuern des Schweißenergieeintrages bei einem nachfolgenden Schweißen einer weiteren Leiterendengruppe abhängig von dem erfassten Größenparameter der erstarrten Schweißperle.

Die Benennung der Schritte mit a) bis f), a1), a2), usw. dient hier nur zur leichteren Referenzierung und soll keinerlei Vorgaben hinsichtlich Reihenfolge oder Vorhandensein von Schritten beinhalten, d.h. eine Ausgestaltung kann z.B. die Schritte e) und f) ohne die Schritte c) oder d) enthalten.

Es ist bevorzugt, dass Schritt e) an einer ersten Leiterendengruppe durchgeführt wird, während Schritt b) bereits an einer zweiten Leiterendengruppe durchgeführt wird.

Es ist bevorzugt, dass Schritt e) zum Charakterisieren des Schweißergebnisses durchgeführt wird. Unter den Begriff "Charakterisieren" fällt insbesondere ein Analysieren der Längenerstreckung und/oder Breitenerstreckung der bei einer vorangegangenen Schweißung entstandenen Schweißperle. Beispielsweise kann anhand der Ausdehnung und/oder Lage der Schweißperle das Schweißergebnis in eine von mehreren Kategorien eingeteilt werden, wobei jede Kategorie mit einer vorbestimmten Steueraktion zum Steuern des Schweißenergieeintrages einer der nachfolgenden Schweißungen verknüpft ist.

Es ist bevorzugt, dass Schritt e) ein Vergleichen des wenigstens einen Größenparameters mit einem vorbestimmten Parameterwert oder Parameterwertbereich umfasst.

Es ist bevorzugt, dass Schritt a) den Schritt umfasst:
a1) Positionsmessen der Relativposition mittels optischer Messverfahren.

Es ist bevorzugt, dass Schritt a) den Schritt umfasst:
a2) Positionsmessen der Relativposition mittels Laufzeitmessung reflektierter Strahlung.

Es ist bevorzugt, dass Schritt a) den Schritt umfasst:
a3) Durchführen einer optischen Kohärenztomographie.

Es ist bevorzugt, dass Schritt a) den Schritt umfasst:
a4) Wechselweises Leiten einer Messstrahlung auf unterschiedliche Leiterendengruppen.

Es ist bevorzugt, dass Schritt a) den Schritt umfasst:
a5) Vermessen von Abständen oder Strecken in wenigstens zwei Dimensionen an der Leiterendengruppe.

Es ist bevorzugt, dass Schritt a) den Schritt umfasst:
a6) Vermessen eines Abstandes oder einer Strecke in Richtung der Erstreckung der die Leiterenden aufweisenden Leiterabschnitte.

Es ist bevorzugt, dass Schritt a) den Schritt umfasst:
a7) Messen eines Abstands zwischen den Leiterenden.

Es ist bevorzugt, dass Schritt a) den Schritt umfasst:
a8) Messen eines Höhenversatzes zwischen den Leiterenden.

Es ist bevorzugt, dass Schritt a) den Schritt umfasst:
a9) Messen einer Querschnittsfläche des Endbereichs der Leiterendengruppe.

Es ist bevorzugt, dass Schritt a) den Schritt umfasst:
a10) Messen eines Volumens des Endbereichs der Leiterendengruppe.

Es ist bevorzugt, dass Schritt a) den Schritt umfasst:
a11) Messen einer Dicke, einer Breite und/oder einer Höhe des Endbereichs an der Leiterendengruppe.

Es ist bevorzugt, dass Schritt a) den Schritt umfasst:
a12) Erfassen einer Änderung wenigstens einer Dimension des Endbereichs der Leiterendengruppe. Beispielsweise können bei allen in Schritten a1) bis a11) genannten Messungen Absolutwerte und/oder Änderungen erfasst werden.

Es ist bevorzugt, dass Schritt c) den Schritt umfasst:
c1) Positionsmessen des Schmelzbads mittels optischer Messverfahren.

Es ist bevorzugt, dass Schritt c) den Schritt umfasst:
c2) Positionsmessen des Schmelzbads mittels Laufzeitmessung reflektierter Strahlung.

Es ist bevorzugt, dass Schritt c) den Schritt umfasst:
c3) Durchführen einer optischen Kohärenztomographie.

Es ist bevorzugt, dass Schritt c) den Schritt umfasst:
c4) Wechselweises Leiten einer Messstrahlung auf unterschiedliche Leiterendengruppen.

Es ist bevorzugt, dass Schritt c) den Schritt umfasst:
c5) Vermessen von Abständen oder Strecken des Schmelzbads in wenigstens zwei Dimensionen an der Leiterendengruppe.

Es ist bevorzugt, dass Schritt c) den Schritt umfasst:
c6) Vermessen eines Abstandes oder einer Strecke des Schmelzbads in Richtung der Erstreckung der die Leiterenden aufweisenden Leiterabschnitte.

Es ist bevorzugt, dass Schritt c) den Schritt umfasst:
c7) Ermitteln eines Abstands zwischen den Leiterenden, an denen sich das Schmelzbads ausbildet.

Es ist bevorzugt, dass Schritt c) den Schritt umfasst:
c8) Messen eines Höhenversatzes zwischen den Leiterenden, an denen sich das Schmelzbad ausbildet.

Es ist bevorzugt, dass Schritt c) den Schritt umfasst:
c9) Ermitteln einer Querschnittsfläche des Schmelzbads.

Es ist bevorzugt, dass Schritt c) den Schritt umfasst:
c10) Ermitteln eines Volumens des Schmelzbads.

Es ist bevorzugt, dass Schritt c) den Schritt umfasst:
c11) Messen einer Dicke, einer Breite und/oder einer Höhe des Schmelzbads.

Es ist bevorzugt, dass Schritt c) den Schritt umfasst:
c12) Erfassen eines Abstands des Schweißbades zu einem oder mehreren benachbarten Leiterendengruppe(n). Insbesondere lässt sich eine Luft- und Kriechstrecke zwischen verschweißten Leiterendengruppen erfassen und überwachen, so dass eine minimale Luft- und Kriechstrecke nicht unterschritten wird.

Es ist bevorzugt, dass Schritt c) den Schritt umfasst:
c13) Erfassen einer Änderung wenigstens einer Dimension des Schmelzbads. Beispielsweise können bei allen in Schritten c1) bis c12) genannten Messungen Absolutwerte und/oder Änderungen erfasst werden.

Es ist bevorzugt, dass Schritt e) den Schritt umfasst:
e1) Positionsmessen der Schweißperle mittels optischer Messverfahren.

Es ist bevorzugt, dass Schritt e) den Schritt umfasst:
e2) Positionsmessen der Schweißperle mittels Laufzeitmessung reflektierter Strahlung.

Es ist bevorzugt, dass Schritt e) den Schritt umfasst:
e3) Durchführen einer optischen Kohärenztomographie.

Es ist bevorzugt, dass Schritt e) den Schritt umfasst:
e4) Wechselweises Leiten einer Messstrahlung auf unterschiedliche Leiterendengruppen.

Es ist bevorzugt, dass Schritt e) den Schritt umfasst:
e5) Vermessen von Abständen oder Strecken in wenigstens zwei Dimensionen an der Schweißperle.

Es ist bevorzugt, dass Schritt e) den Schritt umfasst:
e6) Vermessen eines Abstandes oder einer Strecke der Schweißperle in Richtung der Erstreckung der die Leiterenden aufweisenden Leiterabschnitte.

Es ist bevorzugt, dass Schritt e) den Schritt umfasst:
e7) Messen eines Abstands zwischen den Leiterenden, an denen sich die Schweißperle ausgebildet hat.

Es ist bevorzugt, dass Schritt e) den Schritt umfasst:
e8) Messen eines Höhenversatzes zwischen den Leiterenden, an denen sich die Schweißperle ausgebildet hat.

Es ist bevorzugt, dass Schritt e) den Schritt umfasst:
e9) Ermitteln einer Querschnittsfläche der Schweißperle.

Es ist bevorzugt, dass Schritt e) den Schritt umfasst:
e10) Ermitteln eines Volumens der Schweißperle.

Es ist bevorzugt, dass Schritt e) den Schritt umfasst:
e11) Messen einer Dicke, einer Breite und/oder einer Höhe der Schweißperle.

Es ist bevorzugt, dass Schritt e) den Schritt umfasst:
e12) Erfassen eines Abstands der Schweißperle zu einem oder mehreren benachbarten Leiterendengruppe(n). Insbesondere lässt sich eine Luft- und Kriechstrecke zwischen verschweißten Leiterendengruppen erfassen und mit einer minimalen Luft- und Kriechstrecke vergleichen.

Es ist bevorzugt, dass Schritt e) den Schritt umfasst:
e13) Erfassen einer Änderung wenigstens einer Dimension der Schweißperle. Beispielsweise können bei allen in Schritten e1) bis e12) genannten Messungen Absolutwerte und/oder Änderungen erfasst werden.

Es ist bevorzugt, dass Schritt b) den Schritt umfasst:
b1) Leiten eines Schweißstrahls auf die Leiterendengruppe.

Es ist bevorzugt, dass Schritt b) den Schritt umfasst:
b2) Starten des Schweißenergieeintrags auf die Leiterendengruppe.

Es ist bevorzugt, dass Schritt b) den Schritt umfasst:
b3) Stoppen des Schweißenergieeintrags auf die Leiterendengruppe.

Es ist bevorzugt, dass Schritt b) den Schritt umfasst:
b4) Vergrößern oder Verringern des Schweißenergieeintrags auf die Leiterendengruppe.

Es ist bevorzugt, dass Schritt b) den Schritt umfasst:
b5) Verändern eines Strahlquerschnitts eines Schweißstrahls auf der Leiterendengruppe.

Es ist bevorzugt, dass Schritt d) den Schritt umfasst:
d1) Leiten eines Schweißstrahls auf die Leiterendengruppe.

Es ist bevorzugt, dass Schritt d) den Schritt umfasst:
d2) Starten des Schweißenergieeintrags auf die Leiterendengruppe.

Es ist bevorzugt, dass Schritt d) den Schritt umfasst:
d3) Stoppen des Schweißenergieeintrags auf die Leiterendengruppe.

Es ist bevorzugt, dass Schritt d) den Schritt umfasst:
d4) Vergrößern oder Verringern des Schweißenergieeintrags auf die Leiterendengruppe.

Es ist bevorzugt, dass Schritt d) den Schritt umfasst:
d5) Verändern eines Strahlquerschnitts eines Schweißstrahls auf der Leiterendengruppe.

Es ist bevorzugt, dass Schritt f) den Schritt umfasst:
f1) Leiten eines Schweißstrahls auf die aktuell zu verschweißende Leiterendengruppe.

Es ist bevorzugt, dass Schritt f) den Schritt umfasst:
f2) Starten des Schweißenergieeintrags auf die aktuell zu verschweißende Leiterendengruppe.

Es ist bevorzugt, dass Schritt f) den Schritt umfasst:
f3) Stoppen des Schweißenergieeintrags auf die aktuell zu verschweißende Leiterendengruppe.

Es ist bevorzugt, dass Schritt f) den Schritt umfasst:
f4) Vergrößern oder Verringern des Schweißenergieeintrags auf die aktuell zu verschweißende Leiterendengruppe.

Es ist bevorzugt, dass Schritt f) den Schritt umfasst:
f5) Verändern eines Strahlquerschnitts eines Schweißstrahls auf der aktuell zu verschweißenden Leiterendengruppe.

Besonders bevorzugt sind die Leiter Rechteckleiter mit rechteckigem Querschnitt. Bevorzugt haben die Leiterenden einen rechteckigen Querschnitt.

Das Schweißverfahren gemäß einer der voranstehenden Ausgestaltungen wird vorzugsweise mittels einer Schweißvorrichtung gemäß einer der nachstehenden Ausgestaltungen durchgeführt. Vorzugsweise ist die Schweißvorrichtung gemäß einer der nachstehenden Ausgestaltungen zum Durchführen des Schweißverfahrens gemäß einer der voranstehenden Ausgestaltungen ausgebildet.

Gemäß einem weiteren Aspekt schafft die Erfindung eine Schweißvorrichtung zum Verschweißen von in Leiterendengruppen gruppierten Leiterenden eines Bauteils für eine elektrische Maschine, umfassend:
eine Schweißeinrichtung zum Eintragen von Schweißenergie auf eine Leiterendengruppe;
eine Messeinrichtung zum Erfassen einer Relativposition eines ersten Leiterendes und eines zweiten Leiterendes der Leiterendengruppe und
eine Steuereinrichtung, die dazu ausgebildet ist, einen Schweißenergieeintrag auf die zu verschweißenden Leiterenden abhängig von der erfassten Relativposition zu steuern.

Erfindungsgemäß ist weiter vorgesehen, dass die Messeinrichtung dazu ausgebildet ist, wenigstens einen Größenparameter eines beim Schweißen entstehenden Schmelzbades zu erfassen, und dass die Steuereinrichtung dazu ausgebildet ist, den Schweißenergieeintrag abhängig von dem erfassten Größenparameter des Schmelzbades zu steuern.

Es ist bevorzugt, dass die Messeinrichtung zum Erfassen wenigstens eines Größenparameters einer nach dem Schweißen erstarrten Schweißperle ausgebildet ist und dass die Steuereinrichtung dazu ausgebildet ist, einen Schweißenergieeintrag bei einem nachfolgenden Schweißen einer weiteren Leiterendengruppe abhängig von dem erfassten Größenparameter der erstarrten Schweißperle zu steuern.

Es ist bevorzugt, dass die Messeinrichtung wenigstens einen oder mehrere Ablenkspiegel aufweist, mittels dem oder denen Messstrahlung wahlweise zu unterschiedlichen Leiterendengruppen leitbar ist.

Es ist bevorzugt, dass die Messeinrichtung dazu ausgebildet ist, den Größenparameter der nach dem Schweißen erstarrten Schweißperle an einer ersten Leiterendengruppe zu messen und gleichzeitig die Relativposition der Leiterenden und/oder den Größenparameter des Schweißbades bereits an einer zweiten Leiterendengruppe zu erfassen.

Es ist bevorzugt, dass die Messeinrichtung zum Bewerten des Schweißergebnisses ausgebildet ist. Das Bewerten beinhaltet insbesondere ein Charakterisieren, wie oben zu einer Ausgestaltung des Schweißverfahrens ausgeführt.

Es ist bevorzugt, dass die Messeinrichtung eine Vergleichseinrichtung zum Vergleichen des wenigstens einen Größenparameters mit einem vorbestimmten Parameterwert oder Parameterwertbereich umfasst.

Es ist bevorzugt, dass die Messeinrichtung zum Positionsmessen mittels optischer Messverfahren ausgebildet ist.

Es ist bevorzugt, dass die Messeinrichtung zum Positionsmessen mittels Laufzeitmessung reflektierter Strahlung ausgebildet ist.

Es ist bevorzugt, dass die Messeinrichtung zum Durchführen einer optischen Kohärenztomographie ausgebildet ist.

Es ist bevorzugt, dass die Messeinrichtung zum wechselweisen Leiten einer Messstrahlung auf unterschiedliche Leiterendengruppen ausgebildet ist.

Es ist bevorzugt, dass die Messeinrichtung zum Vermessen von Abständen oder Strecken in wenigstens zwei Dimensionen an der Leiterendengruppe ausgebildet ist. Besonders bevorzugt ist, dass die Messeinrichtung zum Vermessen von Abständen oder Strecken in allen drei Dimensionen an der Leiterendengruppe ausgebildet ist.

Es ist bevorzugt, dass die Messeinrichtung zum Vermessen eines Abstandes oder einer Strecke in Richtung der Erstreckung der die Leiterenden aufweisenden Leiterabschnitte ausgebildet ist.

Es ist bevorzugt, dass die Messeinrichtung zum Messen eines Abstands zwischen den Leiterenden ausgebildet ist.

Es ist bevorzugt, dass die Messeinrichtung zum Messen eines Höhenversatzes zwischen den Leiterenden ausgebildet ist.

Es ist bevorzugt, dass die Messeinrichtung zum Ermitteln einer Querschnittsfläche des Endbereichs der Leiterendengruppe ausgebildet ist.

Es ist bevorzugt, dass die Messeinrichtung zum Ermitteln eines Volumens des Endbereichs der Leiterendengruppe ausgebildet ist.

Es ist bevorzugt, dass die Messeinrichtung zum Messen einer Dicke, einer Breite und/oder einer Höhe des Endbereichs an der Leiterendengruppe ausgebildet ist.

Es ist bevorzugt, dass die Messeinrichtung zum Erfassen einer Änderung wenigstens einer Dimension des Endbereichs der Leiterendengruppe ausgebildet ist.

Selbstverständlich kann die Messeinrichtung zum Ausüben mehrerer der vorgenannten Messfunktionen ausgebildet sein.

Vorzugsweise ist die Steuereinrichtung dazu ausgebildet, die Schweißeinrichtung zum Leiten eines Schweißstrahls auf die Leiterendengruppe anzusteuern.

Vorzugsweise ist die Steuereinrichtung dazu ausgebildet, die Schweißeinrichtung zum Starten des Schweißenergieeintrags auf die Leiterendengruppe anzusteuern.

Vorzugsweise ist die Steuereinrichtung dazu ausgebildet, die Schweißeinrichtung zum Stoppen des Schweißenergieeintrags auf die Leiterendengruppe anzusteuern.

Vorzugsweise ist die Steuereinrichtung dazu ausgebildet, die Schweißeinrichtung zum Vergrößern oder Verringern des Schweißenergieeintrags auf die Leiterendengruppe anzusteuern.

Vorzugsweise ist die Steuereinrichtung dazu ausgebildet, die Schweißeinrichtung zum Verändern eines Strahlquerschnitts eines Schweißstrahls auf der Leiterendengruppe anzusteuern.

Gemäß einem weiteren Aspekt schafft die Erfindung ein Computerprogrammprodukt, enthaltend maschinenlesbare Steueranweisungen, die, wenn in eine Steuerung einer Schweißvorrichtung nach einer der voranstehenden Ausgestaltungen geladen, die Schweißvorrichtung veranlassen, das Schweißverfahren nach einer der voranstehenden Ausgestaltungen durchzuführen. Eine Steuerung, in der solche Steueranweisungen geladen sind, ist ein Ausführungsbeispiel für die Steuereinrichtung der voranstehenden Ausgestaltungen.

Im Folgenden werden Effekte, Funktionen und Vorteile bevorzugter Ausgestaltungen der Erfindung näher erläutert.

Bevorzugte Ausgestaltungen der Erfindung werden zum Schweißen bei der Großserienherstellung von Bauteilen von elektrischen Maschinen eingesetzt, wie sie aus [1] bis [4] beschrieben und gezeigt ist. Es wird für weitere Einzelheiten ausdrücklich auf diese Literaturstellen verwiesen. Beispielsweise werden als Leiter dabei Kupferdrähte eingesetzt.

Die Kontaktierung von elektrisch zu verschaltenden Kupferdrähten (auch Kupferpins genannt) erfolgt über stoffschlüssige Verbindungen, die mit unterschiedlichen Schweißverfahren realisiert werden können. Hierfür sind derzeit neben diversen Strahlschweißverfahren wie dem Laserstrahl- oder Elektronenstrahlschweißen auch lichtbogenbasierte Verfahren, wie WIG und Plasmaschweißen etabliert. Diese Schweißverfahren kommen auch bei verschiedenen Ausführungsformen der Erfindung zum Einsatz.

Vorzugsweise werden die zu kontaktierenden Leiterenden (im Folgenden auch Pins genannt) im Parallelstoß stirnseitig an deren freien Enden verschweißt, wobei die Geometrie der Schweißverbindung eine perlen- bzw. halbkugelförmige Kontur ausbildet.

Vorzugsweise wird in Abhängigkeit der erforderlichen mechanischen und elektrischen Eigenschaften der Anbindungsquerschnitt über das Schmelzevolumen bzw. die Perlenhöhe individuell eingestellt. Beim Schweißprozess erfolgt eine flächige Energieeinbringung, sodass die Stirnfläche vollständig aufgeschmolzen wird und eine geschlossene Schmelzedecke resultiert. Im Detail wird die Energie entlang einer charakteristischen Schweißkontur eingebracht, deren Geometrie und Dimension in Abhängigkeit des Drahtquerschnittes gewählt wird. Die Dimension dieser Konturen erstreckt sich über den gesamten Querschnitt des Pinpaares (Beispiel für eine Leiterendengruppe), sodass eine konstante und gleichmäßige Schmelzedecke entsteht. In Abhängigkeit des erforderlichen Anbindungsquerschnittes wird ein charakteristisches Schmelzevolumen vorgesehen.

Bei bisherigen Schweißverfahren muss eine Wiederholung der Schweißkontur erfolgen, bis der erforderliche Anbindungsquerschnitt erreicht ist. Jedoch sehen herkömmliche Verfahren und Vorrichtungen nicht vor, das Schmelzevolumen mit systemtechnischen Messmitteln zu überwachen und den Energieeintrag situationsabhängig zu steuern. Vielmehr werden bei herkömmlichen Verfahren und Vorrichtungen die prozesstechnischen Stellgrößen derart gewählt, dass der erforderliche Anbindungsquerschnitt auch dann erreicht wird, wenn ungünstige Randbedingungen hinsichtlich der Pinpositionen vorliegen. Im Vergleich dazu resultiert bei idealen Randbedingungen ein überdimensionaler Energieeintrag. Grundsätzlich wirkt sich dies jedoch negativ auf die Minimierung der entlackten Länge (Länge über die eine Isolierschicht an den Leiterenden entfernt worden ist) und der Schweißzeit aus. Im schlimmsten Fall können bei einer Kombination ungünstiger Randbedingungen hinsichtlich der Positionsversätze der Pins, Toleranzen nicht beliebig ausgeglichen werden, bzw. die Prozessparameter nicht derart konfiguriert werden, sodass beliebig hohe Pinversätze kompensiert werden können. Bei derartigen Randbedingungen resultiert eine Schweißverbindung, dessen Anbindungsquerschnitt nicht den Anforderungen entspricht und somit ein "niO" ("nicht in Ordnung") darstellt. Typischerweise enthält ein Stator zw. 150 und 300 Schweißverbindungen, wobei bereits eine einzige niO-Schweißverbindung zu einem Ausschuss des gesamten Stators führt.

Ausgestaltungen der Erfindung sehen daher eine situationsabhängige Anpassung des Energieeintrages und somit eine hohe Prozessstabilität vor. Aus systemtechnischer Sicht kann dies bei bevorzugten Ausgestaltungen der Erfindung mit einem Messtool erreicht werden, das die Pinpositionen mit belastbaren Bewertungsgrößen vor dem Schweißvorgang quantifiziert. Zudem ist eine InLine-Eingriffsmöglichkeit entsprechend der Pincharakteristik bevorzugt.

Vorzugsweise erfolgt eine vorgelagerte Positionsvermessung der Pins bei jedem zu schweißenden Pinpaar, da diese eine individuelle Position in x-, y- und z-Richtung aufweisen können. Weiter vorzugsweise erfolgt ebenfalls für jeden Schweißvorgang eine InLine-Vermessung des Prozesszonenwachstums, um den Energieeintrag situativ implementieren zu können.

Aktuell bei bisherigen Lösungsansätzen vorgesehene Prozessüberwachungssysteme beschränken sich auf die Detektion von Prozessemissionen und bewerten zudem ausschließlich die Konstanz dieser Bewertungsgrößen. Hierbei wird neben thermischen Größen auch das Prozessleuchten sowie die Keyholetiefe detektiert und hinsichtlich deren Konstanz und Streuweite ausgewertet. Diese Methode ermöglicht eine Bewertung der Prozesskonstanz über die Prozessdauer, wobei die Änderungen im Signalverlauf keinen direkten Rückschluss auf die Fehlerart zulassen. Im Falle von Verunreinigungen der entlackten Pins oder positionsbedingten Einflüssen, die eine Spritzerbildung induzieren, ist mit den genannten Messgrößen kein eineindeutiger Rückschluss auf deren Ursache möglich.

Des Weiteren bieten die bei bisherigen Lösungsansätzen vorgeschlagenen Verfahren keine Möglichkeit, die Prozesszonendimension während eines Schweißprozesses zu quantifizieren.

Bevorzugte Ausgestaltungen der Erfindung ermöglichen eine solche Quantifizierung, um den Energieeintrag situationsabhängig zu steuern, sodass ein Schmelzevolumen resultiert, das den geforderten Anbindungsquerschnitt erzeugt. Damit können ein überdimensionierter Energieeintrag sowie thermische Beschädigungen des Isolationslackes und gleichzeitig zu geringe Anbindungsquerschnitte aufgrund ungünstiger Randbedingungen vermieden werden.

Bisher ist keine InLine Detektion des resultierenden Schmelzevolumens in Abhängigkeit der Pinposition möglich, um situationsgerecht den Energieeintrag steuern zu können.

Die durch bisherige Lösungsansätze vorgeschlagenen Messverfahren und - strategien sind nicht geeignet, um die Schmelzebildung und das Schmelzevolumen während eines Schweißvorgangs prozesssicher und reproduzierbar zu quantifizieren. Demnach besteht keine Möglichkeit, den Energieeintrag in Abhängigkeit des Schmelzevolumens InLine und somit situationsabhängig zu steuern.

In Abhängigkeit der genannten Randbedingungen variieren jedoch das Schmelzevolumen und somit auch der Anbindungsquerschnitt, da die absorbierte Energie variiert. Dem kann mit den Ausführungsformen der Erfindung begegnet werden.

Bevorzugte Ausgestaltungen der Erfindung haben insbesondere folgende besonders vorteilhafte Funktionen:
- InLine Quantifizierung der Prozesszonendimension zur individuellen Steuerung des Energieeintrages beim Schweißen von Hairpins mit undefinierten Pinpositionen wie Tangential- Radial- und Höhenversatz (TV, RV, HV).
- Unabhängig einer möglichen Kombination von Versätzen und weiterer Randbedingungen ist ein konstanter Anbindungsquerschnitt möglich.

Somit lässt sich insbesondere ein Schweißverfahren zum Schweißen von aus einzelnen Leiterstücken, wie insbesondere U-förmigen Leiterstücken (Hairpins), gebildeten Spulenwicklungen eines Stators schaffen, das besondere Vorteile hinsichtlich der Funktionsfähigkeit des Stators hat. Die Funktionsfähigkeit eines Stators ist nur dann gegeben, wenn alle Schweißverbindungen technisch i.O. sind. Da Statoren meist mehr als 200 Pinpaare beinhalten, resultiert ein hoher Anspruch an die Schweißnahtqualität, da bereits eine niO Verbindung ausreicht, sodass der gesamte Stator Ausschuss ist. Eine solch hohe Schweißqualität ist mit Ausführungsbeispielen der Erfindung erreichbar.

Ausgestaltungen der Erfindung sehen ein Messsystem vor, das erstens die Pinposition hinsichtlich Versetzungen RV, TV und HV in einer, zwei oder drei Dimensionen quantifiziert, um gegebenenfalls pinbezogen die erforderliche Flächenenergie zu bestimmen. Zweitens ist eine InLine Quantifizierung des Schmelzevolumens ermöglicht, um Rückschlüsse auf den Anbindungsquerschnitt zu ermöglichen und somit eine auf das Pinpaar angepasste Energiemenge zu implementieren.

Es werden abweichend vom Stand der Technik nicht nur ausschließlich Prozessemissionen wie die Intensität des Plasmaleuchtens oder der Temperaturverlauf erfasst und hinsichtlich deren Konstanz bewertet, vielmehr ermöglicht die hier vorgeschlagene Auswertung eine Korrelation zum tatsächlich resultierenden Schmelzevolumen.

Es wird eine geeignete Messstrategie vorgeschlagen, um Pinpaare trotz Positionsabweichungen (z.B. Radialversatz RV, Tangentialversatz TV, Höhenversatz HV) reproduzierbar zu schweißen, sodass die geforderten Anbindungsquerschnitte resultieren. Dadurch kann auf ein vorgelagertes Schneiden der Hairpins verzichtet werden.

Bevorzugte Ausgestaltungen der entwickelten Messstrategie ermöglichen eine Inline-Quantifizierung der Prozesszonendimension und somit eine Eingriffsgrenze, sobald das erforderliche Schmelzevolumen bzw. der Anbindungsquerschnitt erreicht wurde. Damit kann Ausschuss aufgrund zu geringer Anbindungsquerschnitte, die bei hohen Spaltmaßen oder Versätzen resultieren, vermieden werden. Des Weiteren kann auf ein vorgelagertes Beschneiden der Pinhöhen verzichtet werden, sodass ein sehr großes finanzielles Einsparpotential pro Station erreicht werden kann.

Bevorzugte Ausgestaltung des Systems: Das Messsystem basiert vorzugsweise auf optischer Kohärenztomographie kurz OCT: Hierbei wird z.B. ein Messstrahl mit einer Wellenlänge von ca. 840 nm emittiert. Über eine Berechnung der Laufzeit des reflektierten Signals wird die Höheninformation des Bauteils in z-Richtung ermittelt.

Die Messstrategie kann als Doppelkreuz ausgeführt werden, um die Positionen der ungeschnittenen Hairpins vor dem Schweißen in x-y-z-Richtung zu charakterisieren. Entsprechend der Positionen kann eine pinbezogene Leistungsverteilung bzw. Flächenenergie berechnet werden, sodass eine homogene Schweißperle resultiert. Des Weiteren kann während des Schweißprozesses die Prozesszonendimension iterativ gemessen werden, um definierte Grenzwerte des Anbindungsquerschnittes zu erreichen bzw. die zulässig Perlendimension nicht zu überschreiten. Im Detail wird hierbei die Änderung der Längen-, Breiten- und Höhenerstreckung während des Prozesses quantifiziert. Da beim Aufschmelzen des Kupfers eine Volumenzunahme stattfindet, ändert sich die Höhe des zu verschweißenden Pinpaares. Bei anhaltendem Energieeintrag resultiert eine vollständige Schmelzedecke bis bei ausreichendem Schmelzevolumen ein seitlicher Perlenüberhang entsteht. Dieser ist direkt proportional zu einem spezifischen Schmelzevolumen und somit zu einem definierten Anbindungsquerschnitt.

Im Detail kann bei einer bevorzugten Ausgestaltung mittels optischer Kohärenztomographie die Änderung der Prozesszonendimension während eines Schweißprozesses gemessen werden. Basierend darauf kann eine Korrelation zum Anbindungsquerschnitt hergestellt werden. Sobald das gewünschte Schmelzevolumen bzw. der erforderliche Anbindungsquerschnitt vorliegt, kann der Energieeintrag gestoppt werden. Somit kann eine situationsabhängige Energiezufuhr realisiert werden, die Ausschuss vermeidet und die Prozessfähigkeit erhöht.

Des Weiteren ist bei bevorzugten Ausgestaltungen neben einer Prozesssteuerung zur Einstellung individueller Zielgrößen der Perlendimension und des Anbindungsquerschnittes auch eine Charakterisierung der Schweißergebnisse möglich. Hierbei erfolgt vorzugsweise eine geometrische Vermessung der Perlen nach vollständiger Erstarrung des Schmelzbades. Dieser Prozessschritt wird vorzugsweise während des Schweißvorganges einer Perle zwischengeschaltet, da die Erstarrung nicht unmittelbar nach dem Emissionsstopp abgeschlossen ist. Die Zeit bis zur vollständigen Erstarrung einer Prozesszone wird vorzugsweise genutzt, um das drauf folgende Pinpaar zu schweißen. Nach Erstarrung des vorherigen Schmelzbades wechselt z.B. eine Scanneroptik während eines laufenden Schweißvorganges den Messbereich zur letzten Schweißposition, um die Längen- und Breitenerstreckung der vorherigen Perle zu analysieren. Analog dazu wird das Wachstum der Schweißperle auch an der aktuellen Schweißposition überwacht. Sobald die Schweißperle an der aktuellen Bearbeitungsstelle eine kritische Längen- oder Breitenerstreckung aufweist, wird die Emission der Laserstrahlung gestoppt. Als Bewertungsgröße wird hierfür das Minimalmaß der zulässigen Luft- und Kriechstrecke (d.h. der minimale Abstand zwischen benachbarten Schweißnähten) angesetzt, da der Abstand zum vorherigen Pinpaar und somit - insbesondere unter Berücksichtigung der zuvor erfassten Dimensionen der vorherigen Schweißperle - zur vorherigen Schweißperle bekannt ist. Demnach wird über den Energieeintrag die Dimension der Prozesszonenerstreckung gesteuert, um eine Unterschreitung der minimal erforderlichen Luft- und Kriechstrecke zu vermeiden.

Ausführungsbeispiele der Erfindung werden im Folgenden anhand der beigefügten Zeichnungen näher erläutert. Darin zeigt:
- Fig. 1: eine schematische Blockansicht einer Schweißanordnung mit einem Bauteil mit aus dem Bauteil herausstehenden Leiterendenpaaren - als Beispiel für eine Leiterendengruppe - und einem Ausführungsbeispiel einer Schweißvorrichtung zum Schweißen der Leiterendenpaare;
- Fig. 2a bis 2e: je eine Draufsicht auf ein zu verschweißendes Leiterendenpaar mit Prozesszonenbedingungen zu verschiedenen Zeiten eines Schweißverfahrens inklusive Maßlinien;
- Fig. 3: eine perspektivische Ansicht eines weiteren Leiterendenpaares mit unterschiedlichen Relativpositionen der Leiterenden vor dem Schweißen, entsprechend dem Zustand von Fig. 2a;
- Fig. 4a bis 4d, 5a bis 5d und 6a bis 6d: je eine isometrische Ansicht des zu verschweißenden Leiterendenpaars entsprechend den Zuständen von Fig. 2a bis 2d und zwar in perspektivischer Ansicht, in Seitenansicht und in Draufsicht.

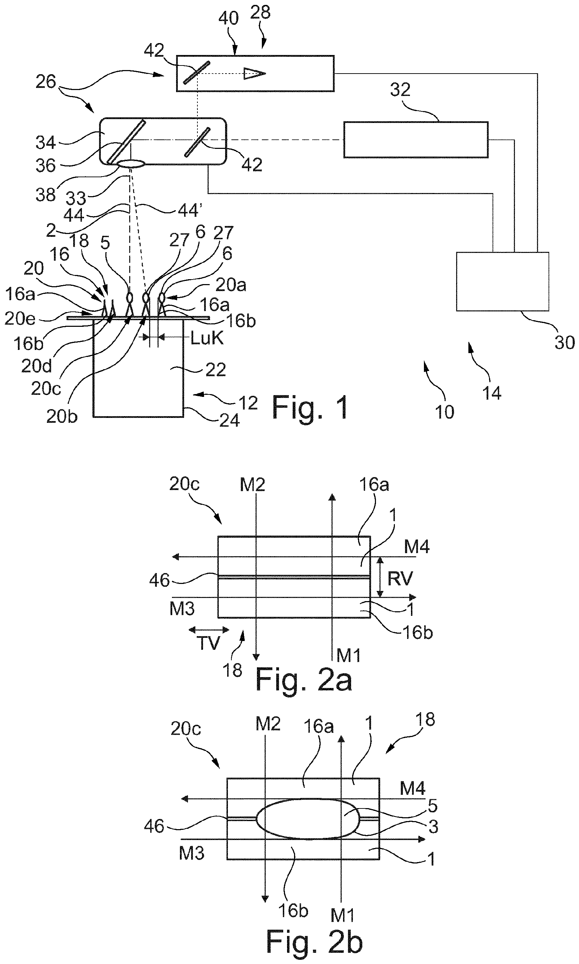

Fig. 1 zeigt ein Ausführungsbeispiel einer Schweißanordnung 10, die ein zu bearbeitendes Bauteil 12 und eine Schweißvorrichtung 14 umfasst. Von dem Bauteil 12 stehen Leiterenden 16, 16a, 16b vor, die in Leiterendengruppen 18, insbesondere Leiterendenpaare 20, von miteinander zu verbindenden Leiterenden 16a, 16b gruppiert sind. Das Bauteil 12 ist ein in Großserie herzustellendes Bauteil einer elektrischen Maschine, wie z.B. eines als Fahrmotor für Elektro- oder Hybridfahrzeuge einzusetzenden Elektromotors. Durch Verbinden von Leiterenden 16 werden Spulenwicklungen des Bauteils 12 hergestellt.

Beispielsweise ist das Bauteil 12 ein Stator 22 des Elektromotors. Die Leiterenden 16 sind z.B. die als Pins 1 bezeichneten Enden von Hairpins, also von etwa U-förmig geformten Drahtstücken, insbesondere aus Rechteckdraht, die in Nuten eines Gehäuses (Blechpaket) 24 des Stators 22 eingefügt sind. Durch Verbinden der freien Enden der Hairpins lassen sich die wellenartig durch den Stator 22 verlaufenden Spulenwicklungen ausbilden. Für nähere Einzelheiten zu dem Aufbau des Stators 22, der Hairpins und dem Herstellverfahren für den Stator 22 wird auf die eingangs erwähnten Literaturstellen [1] bis [4] verwiesen. Wie sich aus diesen Literaturstellen ergibt, stehen vor dem Verschweißen der Spulenwicklungen sehr viele Leiterenden 16 aus einem Ende des Gehäuses 24 vor, die meist zu Leiterendenpaaren 20, 20a-20e gruppiert sind. Es sind meist ein erster Leiter 16a und ein zweiter Leiter 16b eines Leiterendenpaares 20, 20a-20e miteinander zu verschweißen, um so einen Hairpin mit einem anderen Hairpin zu verbinden. Es kann aber auch vorkommen, dass drei oder mehr Leiterenden 16 miteinander zu verbinden sind, was dann ebenfalls durch das im Folgenden näher ausgeführte Schweißen durchzuführen ist. Das Schweißen wird im Folgenden anhand des Beispiels, dass die Leiterendengruppe 18 als Leiterendenpaar 20 ausgebildet ist, erläutert.

An dem Bauteil 12 kann eine Spannvorrichtung 25 der in [4] näher erläuterten Art vorgesehen sein, die die Leiterenden 16a, 16b jedes zu verschweißenden Leiterendenpaares 20 miteinander verspannt. In Fig. 1 sind aus Darstellungsgründen nur sehr schematisch und grob fünf Leiterendenpaare 20a-20e angedeutet, die durch die Schweißvorrichtung 14 nacheinander verschweißt werden. In der Praxis ist eine bedeutend größere Zahl (z.B. 150 bis 300 oder sogar mehr) von Leiterendenpaaren 20 pro Bauteil 12 zu verschweißen. Bei der Darstellung von Fig. 1 sind bereits das erste und das zweite Leiterendenpaar 20a, 20b fertig geschweißt, was durch eine Schweißnaht 6 mit einer Schweißperle 27 angedeutet ist, während sich das dritte Leiterendenpaar 20c gerade im Schweißprozess befindet, was durch ein Schmelzbad 5 angedeutet ist. Das vierte und fünfte Leiterendenpaar 20d, 20e wäre dann danach zu verschweißen.

Die Schweißvorrichtung 14 ist demnach zum Verschweißen von in Leiterendengruppen 18, 20 gruppierten Leiterenden 16, 16a, 16b eines Bauteils 12 für eine elektrische Maschine ausgebildet. Die Schweißvorrichtung 14 weist eine Schweißeinrichtung 26, eine Messeinrichtung 28 und eine Steuereinrichtung 30 auf.

Die Schweißeinrichtung 26 ist zum Eintragen von Schweißenergie auf eine Leiterendengruppe 18 ausgebildet. Die Schweißeinrichtung 26 kann insbesondere irgendeine Strahlschweißeinrichtung sein, die einen Schweißstrahl 33 nacheinander auf die Leiterendengruppen 18, 20, 20a-20e richten kann. Alternativ kann die Schweißeinrichtung 26 auch ein WIG- oder Plasma-Schweißgerät aufweisen, wobei die Leiterenden 20, 20a-20e nacheinander in die Schweißzone gefahren werden. Bei dem in Fig. 1 gezeigten bevorzugten Ausführungsbeispiel weist die Schweißeinrichtung 26 einen Laser 32 zum Erzeugen eines Laserstrahls 2 als Schweißstrahl 33 zum Laserschweißen und eine Laseroptik 34 zum Ablenken und Fokussieren des Laserstrahls 2 auf. Die Laseroptik 34 weist insbesondere einen oder mehrere galvanometrisch angetriebene Ablenkspiegel 36 und ein Optikelement 38 zum Fokussieren des Laserstrahls 2 und zum Einstellen des Strahlquerschnitts des Laserstrahls 2 auf. Die Laseroptik 34 kann auch Blenden (nicht dargestellt) aufweisen, mit denen der Laserstrahl 2 ganz oder in einstellbarem Ausmaß zum Teil ausgeblendet werden kann. Somit ist die Laseroptik 34 ein Beispiel für eine Einrichtung zum Leiten eines Schweißstrahls 33 auf die Leiterendengruppe 18 und für eine Einrichtung zum Starten, Stoppen, Vergrößern und Verringern des Schweißenergieeintrags auf die Leiterendengruppe 18. Zumindest einige dieser Funktionen können selbstverständlich auch durch andere geeignete Einrichtungen erfüllt werden, wie z.B. am Laser 32 selbst oder am oder im Strahlgang zwischen dem Laser 32 und der Laseroptik 34.

Die Messeinrichtung 28 ist zum Erfassen einer Relativposition eines ersten Leiterendes 16a und eines zweiten Leiterendes 16b der jeweiligen Leiterendengruppe 18, 20, 20a-20e ausgebildet. Die Messeinrichtung 28 kann hierzu unterschiedlich ausgebildet sein, solange sie die Relativpositionen zwischen den Leiterenden 16a, 16b erfassen und ein die Relativposition anzeigendes Messignal an die Steuereinrichtung 30 übermitteln kann. Dies erfolgt vorzugsweise durch optische Messmethoden, wie z.B. Bilderfassung oder optische Längenmessungen, hierzu gibt es verschiedene Messgeräte auf dem Markt. Insbesondere ist die Messeinrichtung 28 dazu ausgebildet, mehrere Dimensionen des Endbereichs der Leiterendengruppe 18, 20, 20a- 20e auszumessen. Bei dem in Fig. 1 dargestellten bevorzugten Ausführungsbeispiel arbeitet die Messeinrichtung 28 über Laufzeitmessung reflektierter Messstrahlung 40 und mehr insbesondere mittels optischer Kohärenztomografie (OCT). Hierzu weist die Messeinrichtung 28 OCT-Gerät 40 mit Ablenkeinrichtung (Scanner) 42 auf. Derartige OCT-Geräte 40 zum Durchführen optischer Kohärenztomografie sind, wie sich z.B. aus der Literaturstelle
[8] "Optische Kohärenztomografie", Eintrag in Wikipedia, wikipedia.org, abgerufen am 26.03.2020
ergibt, für ganz andere Zwecke auf dem Markt erhältlich. Sie werden derzeit in der Medizin, insbesondere zum Erfassen des Augenhintergrunds in der Augenheilkunde, eingesetzt. Mit der Ablenkeinrichtung 42 lässt sich ein Messstrahl 44 des OCT-Geräts 40 über die jeweilige Leiterendengruppe 18, 20, 20a-20e scannen, um die Lage der Konturen der einzelnen Leiterenden 16a, 16b oder auch die Konturen, die Abmaße und das Volumen des Schmelzbads 5 oder der Schweißperle 27 bzw. der Schweißnaht 6 erfassen.

Die Steuereinrichtung 30 ist dazu ausgebildet ist, einen Schweißenergieeintrag auf die zu verschweißenden Leiterenden 16a, 16b abhängig von dem Messsignal der Messeinrichtung 28 zu steuern. Insbesondere lässt sich somit der Schweißenergieeintrag abhängig von der erfassten Relativposition der Leiterenden 16a, 16b steuern. Die Steuereinrichtung 30 weist zum Beispiel eine Steuerung auf, die eine Recheneinheit und einen Speicher umfasst, in dem Steueranweisungen als Software gespeichert sind. Die Steueranweisungen veranlassen die Schweißvorrichtung 14 dazu, das im Folgenden näher erläuterte Schweißverfahren durchzuführen.

Die Messeinrichtung 28 und das damit durchgeführte Messverfahren basieren auf optischer Kohärenztomographie kurz OCT: Bei einer bevorzugten Ausgestaltung der Messeinrichtung 28 wird ein Messstrahl 44 mit einer Wellenlänge von ca. 840 nm emittiert. Über eine Berechnung der Laufzeit des reflektierten Signals wird die Höheninformation des auszumessenden Bereichs an der Leiterendengruppe 18 in z-Richtung ermittelt.

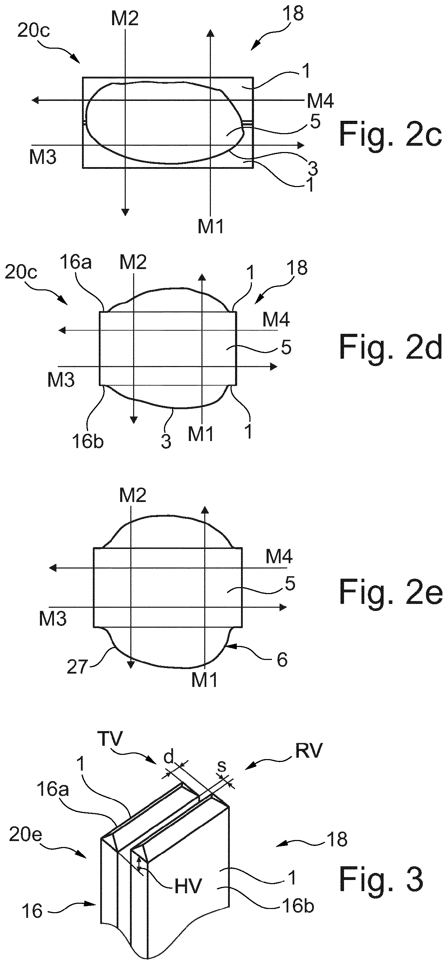

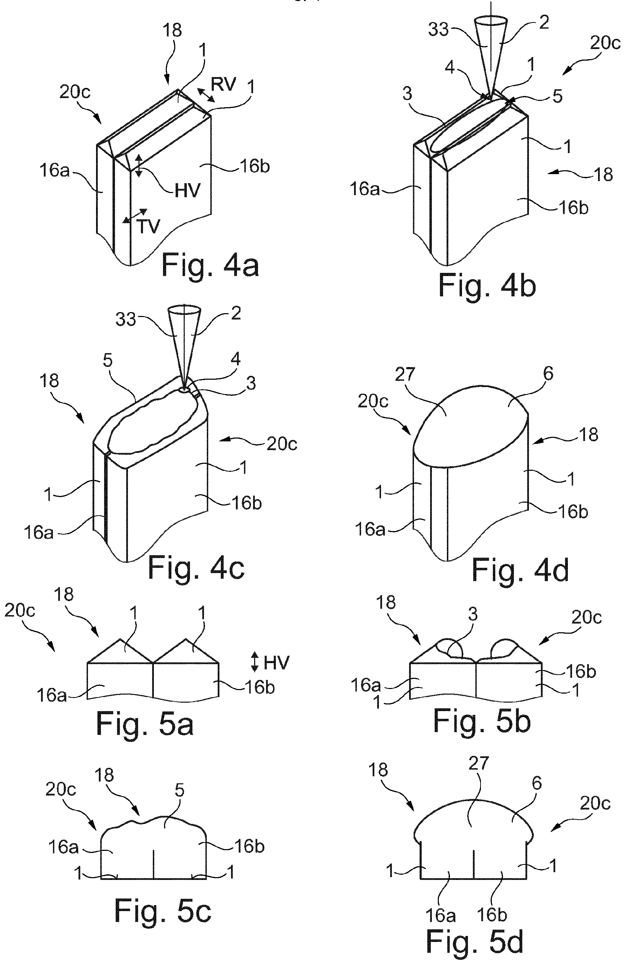

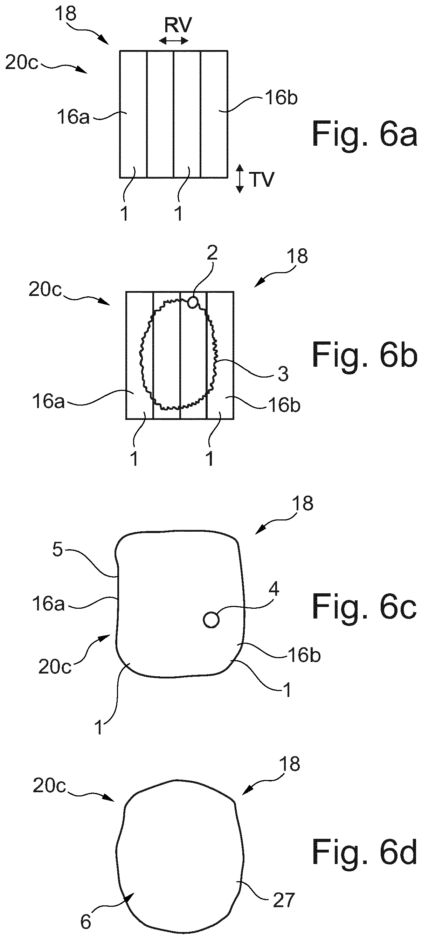

Bei einer möglichen Ausgestaltung des Schweißverfahrens erfolgt, im Gegensatz zu den in [1] bis [4] genannten Literaturstellen kein gemeinsames Schneiden der Leiterenden 16 nach dem Spannen und vor dem Schweißen. Insbesondere liegen ungeschnittene Hairpins - Pins 1 - als Leiterenden 16, 16a, 16b vor, wie dies in Fig. 2a, 4a, 5a, 6a und 3 dargestellt ist, die die Leiterendenpaare 20, 20c, 20d vor den Schweißvorgang zeigen. In Fig. 2a und den Fig. 2b bis 2e sind außerdem Maßlinien M1-M4 für die Durchführung der OCT-Messungen gemäß einer bevorzugten Messstrategie bei den unterschiedlichen Schritten oder Phasen des Schweißverfahrens dargestellt.

Die Messstrategie ist als Doppelkreuz (siehe die sich kreuzenden Maßlinien M1 bis M4) ausgeführt, um die Positionen der ungeschnittenen Hairpins vor dem Schweißen in x-y-z-Richtung zu charakterisieren. So können die Größe eines Spalts 46 zwischen den Leiterenden 16a, 16b, ein Höhenversatz HV zwischen den Leiterenden 16a, 16b, ein Radialversatz RV (bezogen auf die radiale Richtung des eine zentrale Achse aufweisenden Bauteils 12) und ein Tangentialversatz TV zwischen den Leiterenden 16a, 16b erfasst werden. In Fig. 3 ist beispielsweise ein weiteres Leiterendenpaar 20e dargestellt, bei denen die Leiterenden 16a, 16b entsprechend größere Versätze zueinander aufweisen als bei dem Leiterendenpaar 20c, das in den Fig. 2a-2e und 4a-4d bis 6a-6d dargestellt ist.

Entsprechend der Positionen der Leiterenden 16, 16a, 16b kann eine pinbezogene, d.h. individuell für die gerade zu schweißende Leiterendengruppe 18, 20c einzustellende, Leistungsverteilung bzw. Flächenenergie berechnet werden, sodass eine homogene Schweißperle 27 resultiert. Des Weiteren kann während des Schweißprozesses die Prozesszonendimension - hier durch Messung der Dimensionen des Schmelzbads 5 entlang der Maßlinien M1 bis M4 - iterativ gemessen werden, um definierte Grenzwerte des Anbindungsquerschnittes zu erreichen bzw. die zulässig Perlendimension nicht zu überschreiten. Im Detail wird hierbei die Änderung der Längen-, Breiten- und Höhenerstreckung während des Prozesses quantifiziert. Da beim Aufschmelzen des Leiterendenmaterials, z.B. Kupfer, eine Volumenzunahme stattfindet, ändert sich die Höhe des zu verschweißenden Leiterendenpaares 20c. Bei anhaltendem Energieeintrag resultiert eine vollständige Schmelzedecke bis bei ausreichendem Schmelzevolumen ein seitlicher Perlenüberhang entsteht (siehe Fortschritt in den Fig. 2b bis 2e). Dieser ist direkt proportional zu einem spezifischen Schmelzevolumen und somit zu einem definierten Anbindungsquerschnitt (Querschnitt, über den die Leiterenden 16a, 16b vollständig miteinander verbunden sind).

Im Detail kann somit mittels optischer Kohärenztomographie die Änderung der Prozesszonendimension während eines Schweißprozesses gemessen werden. Basierend darauf kann eine Korrelation zum Anbindungsquerschnitt hergestellt werden. Sobald das gewünschte Schmelzevolumen bzw. der erforderliche Anbindungsquerschnitt vorliegt, kann der Energieeintrag gestoppt werden. Somit kann eine situationsabhängige Energiezufuhr realisiert werden, die Ausschuss vermeidet und die Prozessfähigkeit erhöht.

Fig. 1 zeigt zum Beispiel eine Situation, in der der Schweißstrahl 33 - Laserstrahl 2 - der Schweißvorrichtung 14 auf das dritte Leiterendenpaar 20c gerichtet ist, um dieses Leiterendenpaar 20c zu schweißen. Dabei wird die Einleitung der Schweißenergie, abhängig von der Relativposition der Leiterenden 16a, 16b und abhängig von der inline gemessenen aktuellen Größe des Schmelzbads 5, wie sie in Fig. 2b bis 2e zu sehen ist, gesteuert. Wie in Fig. 1 dargestellt ist kurz zuvor das zweite Leiterendenpaar 20b geschweißt worden, dessen Schmelzbad 5 gerade zu einer Schweißperle 27 abkühlt, davor ist das erste Leiterendenpaar 20a geschweißt worden, dessen Schweißperle 27 bereits vollständig erstarrt ist.

Neben einer Prozesssteuerung zur Einstellung individueller Zielgrößen der Perlendimension und des Anbindungsquerschnittes ist mit dem dargestellten Ausführungsbeispiel der Schweißvorrichtung 14 und des Schweißverfahrens auch eine Charakterisierung der Schweißergebnisse möglich.

Hierbei erfolgt eine geometrische Vermessung der Schweißperlen 27 nach vollständiger Erstarrung des Schmelzbades 5. Dieser Prozessschritt wird während des Schweißvorganges einer Perle zwischengeschaltet, da die Erstarrung nicht unmittelbar nach dem Emissionsstopp abgeschlossen ist. Die Zeit bis zur vollständigen Erstarrung einer Prozesszone wird genutzt, um das drauf folgende Pinpaar zu schweißen. Nach Erstarrung des vorherigen Schmelzbades wechselt die Ablenkeinrichtung 42 der Messeinrichtung 28, z.B. Scanneroptik des OCT-Geräts 40, während eines laufenden Schweißvorganges den Messbereich zur letzten Schweißposition, um die Längen- und Breitenerstreckung der vorherigen Perle zu analysieren.

In Fig. 1 ist dies durch den strichpunktiert dargestellten Messstrahl 44' angedeutet, der beim Schweißen des dritten Leiterendenpaares 20c auf das zweite Leiterendenpaar 20b gerichtet wird, um die Schweißperle 27 des zweiten Leiterendenpaares 20b auszumessen und zu bewerten. Auch das Messsignal des Messstrahls 44', welches wenigstens eine Dimension der Schweißperle 27 der zuvorigen Schweißung angibt, geht in die Steuerung des Energieeintrages der aktuellen Schweißung ein. Damit ist die Steuerungseinrichtung 30 dazu ausgebildet, den Schweißenergieeintrag auf das aktuell zu schweißende Leiterendenpaar 20c in Abhängigkeit von einer Charakterisierung des vorhergehenden Schweißergebnisses zu steuern.

Analog dazu wird - siehe der gestrichelte Messtrahl 44 - das Wachstum des Schmelzbads 5 auch an der aktuellen Schweißposition - hier am dritten Leiterendenpaar 20c - überwacht. Sobald das Schmelzbad 5 an der aktuellen Bearbeitungsstelle eine kritische Längen- oder Breitenerstreckung - z. B. dargestellt in Fig. 2e - aufweist, wird die Emission des Laserstrahls 2 gestoppt.

Als Bewertungsgröße wird hierfür das Minimalmaß der zulässigen Luft- und Kriechstrecke LuK (d.h. des Abstands zwischen benachbarten Schweißnähten 6) angesetzt, da der Abstand zur vorherigen Schweißperle 27 bekannt ist. Demnach wird über den Energieeintrag die Dimension der Prozesszonenerstreckung gesteuert, um eine Unterschreitung der minimal erforderlichen Luft- und Kriechstrecke LuK zu vermeiden.

Fig. 2a bis 2e zeigen Draufsichten auf das aktuell zu verschweißende Paar von Pins 1 - Leiterendenpaar 20c - mit Prozesszonendimensionen zu verschiedenen Zeiten des Prozessfortschritts inklusive der Maßlinien M1 bis M4. Wie in Fig. 2a zu sehen, lässt sich somit unter anderem die Größe des Spalts 46 zwischen den Leiterenden 16a, 16b erfassen. Fig. 2b bis 2e zeigen die wachsende Größe des Schmelzbades 5 und somit der Prozesszonendimensionen.

Es kann eine direkte Quantifizierung der aktuellen Relativpositionen der Leiterenden 16a, 16b bei jeder aktuellen Leiterendengruppe 18 und eine direkte Quantifizierung der Schmelzbaddimensionen erfolgen, um so den Fortschritt der Schweißung zu erfassen und den Schweißenergieeintrag optimal zu stoppen oder sonst wie zu steuern.

Aus prozesstechnischer Sicht ergeben sich durch die optische Kohärenztomographie aufgrund der Auswertung von optischen Messgrößen der Prozesszonendimension prozesstechnische Vorteile. Hierbei wird ein Messstrahl 44 in einer bestimmten Wellenlänge emittiert. Über die Laufzeit der reflektierten Strahlung wird eine Höheninformation generiert. Damit kann eine geometrische Veränderung des Schmelzbades 5 detektiert werden, die gleichzeitig als Eingangsgröße für die Dimensionierung des Energieeintrages dient. Damit können die Prozesszonendimension quantifiziert werden und auch können die Pinpositionen vor dem Schweißen und die Schweißperle nach dem Schweißen vermessen werden.

Auch andere auf Laufzeitmessungen basierende Messverfahren können eingesetzt werden. Grundsätzlich ist jedes Messprinzip geeignet, mit dem unterschiedliche Dimensionen der Schweißzone geometrisch ausgemessen werden können.

Bei Ausgestaltungen des Schweißverfahrens erfolgt somit eine Inline-Vermessung der Prozesszonendimensionen (während des Schweißvorganges). Es kann in die Leistungsemission eingegriffen werden, sobald das vorgegebene Schmelzevolumen und/oder der vorgegebene Anbindungsquerschnitt erreicht sind. Es gibt eine direkte Bewertung von für die Qualität der Schweißung entscheidender Bewertungsgrößen.

Vorteile der bevorzugten Ausgestaltung des Schweißverfahrens sind:
- Quantifizierung der tatsächlichen Prozesszonendimension während eines Schweißvorgangs zur situationsangepassten Energieeinbringung
- Vermeidung eines zu hohen Energieeintrages und somit überdimensionierter Schmelzebildung, sowie der Gefahr einer Isolationslackbeschädigung
- Vermeidung eines zu geringen Energieeintrages und somit zu geringer Anbindungsquerschnitte
- Kombination von PreProcess-, InProcess- und PostProcess-Analyse der Schweißverbindung

Die entwickelte Messstrategie ermöglicht insbesondere eine InLine-Quantifizierung der Prozesszonengeometrie und somit die Steuerung des Energieeintrages, um den erforderlichen Anbindungsquerschnitt zu erreichen.

Im Folgenden wird eine Ausgestaltung des Schweißverfahrens näher erläutert, bei dem der Schweißenergieeintrag abhängig von der Relativposition der zu verschweißenden Leiterenden 16a, 16b gesteuert wird. Fig. 2a und die Fig. 4a, 5a und 6a zeigen hierzu Ansichten einer Leiterendengruppe 18 am Beispiel des in Fig. 1 aktuell zu verschweißenden dritten Leiterendenpaars 20c. Fig. 3 zeigt eine weitere Leiterendengruppe 18, zum Beispiel das fünfte Leiterendenpaar 20e mit abweichenden Relativpositionen.

Mittels der Messeinrichtung 28 werden der Höhenversatz HV, der Radialversatz RV und der Tangentialversatz TV der Leiterenden 16a ,16b erfasst. Die Pinpositionen werden hinsichtlich HV, RV und TV charakterisiert. Anschließend erfolgt mittels der Steuerungseinrichtung 30 eine individuelle Berechnung der Energieverteilung für das aktuelle Leiterendenpaar 20c oder 20e.

Im Falle eines vor dem Prozessstart detektierten Versatzes (HV, RV, TV) - siehe Fig. 3 - kann dieser in der Berechnung der erforderlichen Prozesszonendimension berücksichtigt werden, um die geforderten Anbindungsquerschnitte zu erreichen. Zudem kann ein pinbezogener Energieeintrag in Abhängigkeit der Höhenversätze errechnet und auf die jeweiligen Pins 1 implementiert werden.

Wie in den Fig. 2b bis 2e sowie 4b bis 4d, 5b bis 5d und 6b bis 6d gezeigt, erfolgt während der Leistungsemission eine Quantifizierung der Prozesszonendimension entsprechend der vier exemplarisch angeordneten Messlinien M1-M4. In Abhängigkeit der Prozesszonendimension - d.h. insbesondere die Dimensionen der dargestellten Schweißkonturen 3 - ist eine Rückrechnung auf die damit einhergehenden Anbindungsquerschnitte möglich. Folglich kann ein Emissionstop für einen spezifischen Grenzwert des Anbindungsquerschnittes hinterlegt werden, so dass das aktuell zu schweißende Leiterendenpaar 20c, 20e nicht thermisch überbelastet wird. Außerdem kann z.B. durch Steuern der Größe des Laserspots 4 der Schweißenergieeintrag gesteuert werden.

Bei einer Ausgestaltung wird die Relativposition der Leiterenden 16a, 16b erfasst und die Schmelzbaddimensionen werden inline quantifiziert, um den Schweißenergieeintrag zu steuern. Andere Ausgestaltungen haben noch zusätzliche Parameter, anhand derer der Schweißenergieeintrag gesteuert wird.

Bei der in Fig. 1 mit dem Messstrahl 44' angedeuteten Verfahrensweise wird die zuvorige Schweißstelle vermessen und als Eingangsgröße für die Steuerung an der aktuellen Schweißstelle verwendet (PostProcess Schweißstelle 1 = InProcess Schweißstelle 2) Insbesondere erfolgt eine Erfassung der Perlengeometrie von bereits geschweißten Leiterendenpaaren 20a, 20b (Schweißstelle 1) während des Schweißvorgangs für das aktuelle Leiterendenpaar 20c (Schweißstelle 2).

Bei einer weiteren Ausgestaltung wird eines der als nächstes zu verschweißenden Leiterendenpaare 20d, 20e vorlaufend, z.B. noch während des aktuellen Schweißvorganges vermessen. Zum Beispiel erfolgt eine vorlaufende Vermessung der benachbarten Pins 1, d.h. im Beispiel von Fig. 1 insbesondere des vierten Leiterendenpaars 20d und/oder des fünften Leiterendenpaars 20e - in Bezug auf die jeweilige Relativposition, d.h. einen oder mehrere der Relativversätze HV, RV und TV. Dadurch kann die Erfassung der Relativpositionen schneller erfolgen, und das Schweißen des jeweils nächsten Leiterendenpaares 20d kann mit den Eingangsgrößen der Relativpositionen sofort nach Beendigung des zuvorigen Leiterendenpaares 20c beginnen.

Bei einer weiteren Ausgestaltung wird die Luft- und Kriechstrecke LuK von zwei benachbarten bereits geschweißten Pinpaaren ermittelt. Zum Beispiel wird bei der Schweißanordnung 10 von Fig. 1 die Luft- und Kriechstrecke, also insbesondere der freie Abstand, zwischen den Schweißperlen 27 des ersten Leiterendenpaares 20a und des zweiten Leiterendenpaares 20b ermittelt. Liegt der Wert unter einem vorbestimmten Schwellwert oder Vorwarnwert, wird der Energieeintrag für die aktuelle Schweißung verringert. Liegt der Wert über einem vorbestimmten Maximalwert, kann der Energieeintrag erhöht werden, um ein größeres Schmelzevolumen und somit einen größeren Anbindungsquerschnitt zu erlauben.

Bei noch einer weiteren Ausgestaltung können Spritzer detektiert werden. Hierzu wird anstelle des groben Rasters mit wenigen Maßlinien M1 bis M4 ein feineres Raster und vorzugsweise mit gleichzeitig geringerer Linienlänge für das OCT-Verfahren herangezogen. Eine Detektion von Spritzern bis hin zur geschlossenen Schmelzedecke ist möglich. Ein feines Raster mit gleichzeitig geringerer Linienlänge wird deswegen verwendet, da das Schmelzevolumen zu Prozessbeginn den Pinquerschnitt nicht überragt. Damit ist bei markanter Änderung des Höhenniveaus ein Rückschluss auf Spritzer möglich.

Neben der Prozesszonendimension kann als weitere Information eine potentiell auftretende Emission von Spritzern aus der Prozesszone detektiert werden. Speziell bei der Ausbildung des Keyholes oder einer Emission im Spalt können Spritzerbildungen auftreten. Diese kann bei entsprechender Positionierung der Messlinie mittels OCT detektiert werden und als Bewertungsgröße für den Prozess herangezogen werden.

Weitere Ausgestaltungen sehen eine bauteilspezifische Anpassung des Energieeintrages pro Fläche vor. Insbesondere werden der Bestrahlungsort und/oder die Flächenenergie in Abhängigkeit des OCT-Bildes gesteuert.

Bei einem Ausführungsbeispiel geht hierzu als Randbedingung der Höhenversatz HV ein. Dieses Ausführungsbeispiel des Schweißverfahrens weist die folgenden Schritte auf:
s1) Vermessung des gespannten Pinpaares (zum Beispiel Leiterendenpaar 20c oder 20e) im Ausgangszustand, siehe die Fig. 2a, 3, 4a, 5a, 6a, insbesondere mittels OCT, und Identifikation der Höhenlage (z-Richtung) und der x-y-Lage
s2) Identifikation oder Berechnung der Energieverteilung pro Pin 1 entsprechend der xyz-Lage der jeweiligen Pins
s3) a) Flächenenergie entsprechend der Höhendifferenz steuern, insbesondere durch Steuern von Konturlänge, der Geschwindigkeit und/oder der Leistung des Schweißstrahls 33, insbesondere Laserstrahls 2; und/oder
   b) Nachführung der Fokusebene entsprechend der Höhendifferenz.
Bei einem weiteren Ausführungsbeispiel (kann auch kombiniert vorliegen) geht hierzu als Randbedingung der Radialversatz RV ein. Dieses Ausführungsbeispiel des Schweißverfahrens weist die folgenden Schritte auf:
   t1) Vermessung mittels OCT oder dergleichen und Identifikation des Spalts 46
   t2) Berechnung der Startposition und Geometriedimension (Flächenenergie) des Schweißstrahls 33, so dass ausreichend Schmelzevolumen vorliegt, um den Spalt 46 zu schließen
   t3) a) Flächenenergie entsprechend der Höhendifferenz steuern, insbesondere durch Steuern von Position, Konturlänge, der Geschwindigkeit und/oder der Leistung des Schweißstrahls 33, insbesondere Laserstrahls 2; und/oder
      b) Nachführung der Fokusebene entsprechend der Höhendifferenz.

Entsprechend des Höhenversatzes HV und des Spaltmaßes - z.B. ermittelt über den Radialversatz RV - ist der Energieeintrag entsprechend anzupassen, so dass eine homogen ausgeprägte Schweißnaht 6/Schweißperle 27 resultiert.

### Bezugszeichenliste:

- 1: Pin
- 2: Laserstrahl
- 3: Schweißkontur
- 4: Laserspot
- 5: Schmelzbad
- 6: Schweißnaht
- 10: Schweißanordnung
- 12: Bauteil
- 14: Schweißvorrichtung
- 16: Leiterende
- 16a: erstes Leiterende
- 16b: zweites Leiterende
- 18: Leiterendengruppe
- 20: Leiterendenpaar
- 20a: erstes Leiterendenpaar
- 20b: zweites Leiterendenpaar
- 20c: drittes Leiterendenpaar
- 20d: viertes Leiterendenpaar
- 20e: fünftes Leiterendenpaar
- 22: Stator
- 24: Gehäuse
- 25: Spannvorrichtung
- 26: Schweißeinrichtung
- 27: Schweißperle
- 28: Messeinrichtung
- 30: Steuereinrichtung
- 32: Laser
- 33: Schweißstrahl
- 34: Laseroptik
- 36: Ablenkspiegel
- 38: Optikelement
- 40: OCT-Gerät
- 42: Ablenkeinrichtung
- 44: Messstrahl (auf aktuelle Schweißzone)
- 44': Messstrahl (auf zuvorige Schweißzone)
- 46: Spalt
- HV: Höhenversatz
- M1: erste Maßlinie
- M2: zweite Maßlinie
- M3: dritte Maßlinie
- M4: vierte Maßlinie
- LuK: Luft- und Kriechstrecke
- RV: Radialversatz
- TV: Tangentialversatz

## Patentansprüche

1. Schweißverfahren zum Verschweißen von in Leiterendengruppen (18) gruppierten Leiterenden (16, 16a, 16b) eines Bauteils (12) für eine elektrische Maschine, umfassend:
a) Erfassen einer Relativposition eines ersten Leiterendes (16a) und eines zweiten Leiterendes (16b) einer Leiterendengruppe (18) und
b) Steuern eines Schweißenergieeintrages auf die zu verschweißenden Leiterenden (16, 16a, 16b) abhängig von der erfassten Relativposition. **gekennzeichnet durch**
c) Erfassen wenigstens eines Größenparameters eines beim Schweißen entstehenden Schmelzbades (5) und
d) Steuern des Schweißenergieeintrages abhängig von dem erfassten Größenparameter des Schmelzbades (5).

2. Schweißverfahren nach Anspruch 1, **dadurch gekennzeichnet,**
**dass** das Erfassen wenigstens eines Größenparameters des beim Schweißen entstehenden Schmelzbades wenigstens einen der Schritte umfasst:
c9) Ermitteln einer Querschnittsfläche des Schmelzbads;
c10) Ermitteln eines Volumens des Schmelzbads; und/oder
c11) Messen einer Dicke, einer Breite und/oder einer Höhe des Schmelzbads.

3. Schweißverfahren nach Anspruch 1 oder 2,
**gekennzeichnet durch**
e) Erfassen wenigstens eines Größenparameters einer nach dem Schweißen erstarrten Schweißperle (27) und
f) Steuern des Schweißenergieeintrages bei einem nachfolgenden Schweißen einer weiteren Leiterendengruppe (18, 20c) abhängig von dem erfassten Größenparameter der erstarrten Schweißperle (27).

4. Schweißverfahren nach Anspruch 3,
**dadurch gekennzeichnet,**
**dass** Schritt e)
e1) an einer ersten Leiterendengruppe (20a, 20b) durchgeführt wird, während Schritt b) bereits an einer zweiten Leiterendengruppe (20b, 20c) durchgeführt wird; und/oder
e2) zum Charakterisieren des Schweißergebnisses durchgeführt wird; und/oder
e3) ein Vergleichen des wenigstens einen Größenparameters mit einem vorbestimmten Parameterwert oder Parameterwertbereich umfasst.

5. Schweißverfahren nach einem der voranstehenden Ansprüche,
**dadurch gekennzeichnet,**
**dass** wenigstens einer der Schritte a), c) und/oder e) wenigstens einen oder mehrere der folgenden Schritte umfasst:
a1) Positionsmessen mittels optischer Messverfahren;
a2) Positionsmessen mittels Laufzeitmessung reflektierter Strahlung;
a3) Durchführen einer optischen Kohärenztomographie;
a4) Wechselweises Leiten einer Messstrahlung (44) auf unterschiedliche Leiterendengruppen (18, 20c, 20b);
a5) Vermessen von Abständen oder Strecken in wenigstens zwei Dimensionen an der Leiterendengruppe (18);
a6) Vermessen eines Abstandes oder einer Strecke in Richtung der Erstreckung der die Leiterenden (16, 16a, 16b) aufweisenden Leiterabschnitte;
a7) Ermitteln eines Abstands (46) zwischen den Leiterenden (16a, 16b);
a8) Messen eines Höhenversatzes (HV) zwischen den Leiterenden (16a, 16b);
a9) Ermitteln einer Querschnittsfläche des Endbereichs der Leiterendengruppe (18);
a10) Ermitteln eines Volumens des Endbereichs der Leiterendengruppe (18);
a11) Messen einer Dicke, einer Breite und/oder einer Höhe des Endbereichs an der Leiterendengruppe (18);
a12) Erfassen einer Änderung wenigstens einer Dimension des Endbereichs der Leiterendengruppe (18).

6. Schweißverfahren nach einem der voranstehenden Ansprüche,
**dadurch gekennzeichnet,**
**dass** Schritte b) und/oder Schritt d) und/oder Schritt f) wenigstens einen oder mehrere der folgenden Schritte umfasst:
b1) Leiten eines Schweißstrahls (33) auf die Leiterendengruppe (18);
b2) Starten des Schweißenergieeintrags auf die Leiterendengruppe (18);
b3) Stoppen des Schweißenergieeintrags auf die Leiterendengruppe (18);
b4) Vergrößern oder Verringern des Schweißenergieeintrags auf die Leiterendengruppe (18);
b5) Verändern eines Strahlquerschnitts eines Schweißstrahls (33) auf der Leiterendengruppe (18).

7. Schweißvorrichtung (14) zum Verschweißen von in Leiterendengruppen (18) gruppierten Leiterenden (16, 16a, 16b) eines Bauteils (12) für eine elektrische Maschine, umfassend:
eine Schweißeinrichtung (30) zum Eintragen von Schweißenergie auf eine Leiterendengruppe (18);
eine Messeinrichtung (28) zum Erfassen einer Relativposition eines ersten Leiterendes (16a) und eines zweiten Leiterendes (16b) der Leiterendengruppe (18) und
eine Steuereinrichtung (30), die dazu ausgebildet ist, einen Schweißenergieeintrag auf die zu verschweißenden Leiterenden (16a, 16b) abhängig von der erfassten Relativposition zu steuern,
**dadurch gekennzeichnet,**
**dass** die Messeinrichtung (28) dazu ausgebildet ist, wenigstens einen Größenparameter eines beim Schweißen entstehenden Schmelzbades (5) zu erfassen, und dass die Steuereinrichtung (30) dazu ausgebildet ist, den Schweißenergieeintrag abhängig von dem erfassten Größenparameter des Schmelzbades (5) zu steuern.

8. Schweißvorrichtung nach Anspruch 7,
**dadurch gekennzeichnet,**
**dass** die Messeinrichtung (28) dazu ausgebildet ist, zum Erfassen des wenigstens einen Größenparameters des beim Schweißen entstehenden Schmelzbades (5) eine Querschnittsfläche, ein Volumen, eine Dicke, eine Breite und/oder eine Höhe des Schmelzbades zu erfassen.

9. Schweißvorrichtung (14) nach Anspruch 7 oder 8,
**dadurch gekennzeichnet,**
**dass** die Messeinrichtung (28) ausgebildet ist zum Erfassen wenigstens eines Größenparameters einer nach dem Schweißen erstarrten Schweißperle (27) und dass die Steuereinrichtung (30) dazu ausgebildet ist, einen Schweißenergieeintrag bei einem nachfolgenden Schweißen einer weiteren Leiterendengruppe (18, 20c) abhängig von dem erfassten Größenparameter der erstarrten Schweißperle (27) zu steuern.

10. Schweißvorrichtung (14) nach Anspruch 9,
**dadurch gekennzeichnet,**
**dass** die Messeinrichtung (28)
10.1 wenigstens einen oder mehrere Ablenkspiegel (42) aufweist, mittels dem oder denen Messstrahlung (44, 44') wahlweise zu unterschiedlichen Leiterendengruppen (18, 20c, 20b) leitbar ist, und dazu ausgebildet ist, den Größenparameter der nach dem Schweißen erstarrten Schweißperle (27) an einer ersten Leiterendengruppe (18, 20b) zu messen und gleichzeitig die Relativposition der Leiterenden (16a, 16b) und/oder den Größenparameter des Schweißbades (5) bereits an einer zweiten Leiterendengruppe (18, 20c) zu erfassen; und/oder
10.2 zum Bewerten des Schweißergebnisses ausgebildet ist; und/oder
10.3 eine Vergleichseinrichtung zum Vergleichen des wenigstens einen Größenparameters mit einem vorbestimmten Parameterwert oder Parameterwertbereich umfasst.

11. Schweißvorrichtung (14) nach einem der voranstehenden Ansprüche,
**dadurch gekennzeichnet,**
**dass** die Messeinrichtung (28) ausgewählt ist aus einer Gruppe von Messeinrichtungen, die umfasst:
11.1 eine Messeinrichtung zum Positionsmessen mittels optischer Messverfahren;
11.2 eine Messeinrichtung zum Positionsmessen mittels Laufzeitmessung reflektierter Strahlung;
11.3 eine Messeinrichtung zum Durchführen einer optischen Kohärenztomographie;
11.4 eine Messeinrichtung zum wechselweisen Leiten einer Messstrahlung auf unterschiedliche Leiterendengruppen (18, 20b, 20c);
11.5 eine Messeinrichtung zum Vermessen von Abständen oder Strecken in wenigstens zwei Dimensionen an der Leiterendengruppe (18);
11.6 eine Messeinrichtung zum Vermessen eines Abstandes oder einer Strecke in Richtung der Erstreckung der die Leiterenden (16, 16a, 16b) aufweisenden Leiterabschnitte;
11.7 eine Messeinrichtung zum Messen eines Abstands zwischen den Leiterenden (16a, 16b);
11.8 eine Messeinrichtung zum Messen eines Höhenversatzes (HV) zwischen den Leiterenden;
11.9 eine Messeinrichtung zum Ermitteln einer Querschnittsfläche des Endbereichs der Leiterendengruppe (18);
11.10 eine Messeinrichtung zum Ermitteln eines Volumens des Endbereichs der Leiterendengruppe (18);
11.11 eine Messeinrichtung zum Messen einer Dicke, einer Breite und/oder einer Höhe des Endbereichs an der Leiterendengruppe (18);
11.12 eine Messeinrichtung zum Erfassen einer Änderung wenigstens einer Dimension des Endbereichs der Leiterendengruppe (18);
11.13 eine Kombination einer oder mehrerer der Messeinrichtungen gemäß 11.1 bis 11.12.

12. Schweißvorrichtung (14) nach einem der voranstehenden Ansprüche,
**dadurch gekennzeichnet,**
**dass** die Steuereinrichtung (30) dazu ausgebildet ist, die Schweißeinrichtung (26) zum:
b1) Leiten eines Schweißstrahls (33) auf die Leiterendengruppe (18); und/oder
b2) Starten des Schweißenergieeintrags auf die Leiterendengruppe (18);
und/oder
b3) Stoppen des Schweißenergieeintrags auf die Leiterendengruppe (18); und/oder
b4) Vergrößern oder Verringern des Schweißenergieeintrags auf die Leiterendengruppe (18); und/oder
b5) Verändern eines Strahlquerschnitts eines Schweißstrahls (33) auf der Leiterendengruppe (18)
anzusteuern.

13. Computerprogrammprodukt, enthaltend maschinenlesbare Steueranweisungen, die, wenn in eine Steuerung einer Schweißvorrichtung (14) nach einem der Ansprüche 7 bis 12 geladen, die Schweißvorrichtung (14) veranlassen, das Schweißverfahren nach einem der Ansprüche 1 bis 6 durchzuführen.

## Claims

1. Welding method for welding conductor ends (16, 16a, 16b) grouped into conductor-end groups (18) of a component for an electrical machine, comprising:
a) detecting a relative position of a first conductor end (16a) and a second conductor end (16b) of a conductor-end group (18) and
b) controlling a welding energy input to the conductor ends (16, 16a, 16b) to be welded depending on the relative position,
**characterized by**
c) detecting at least one size parameter of a melt pool (5) produced during welding and
d) controlling the welding energy input depending on the size parameter of the melt pool (5).

2. Welding method according to claim 1, **characterized in that** the detection of at least one size parameter of the melt pool produced during melting comprises at least one of the steps:
c9) determining a cross sectional area of the melt pool;
c10) determining a volume of the melt pool; and/or
c11) measuring a thickness, a width and/or a height of the melt pool.

3. Welding method according to claim 1 or 2,
**characterized by**
e) detecting at least one size parameter of a welding bead (27) solidified after welding
f) controlling the welding energy input at a subsequent welding of a further conductor-end group (18, 20c) depending on the detected size parameter of the solidified welding bead (27).

4. Welding method according to claim 3,
**characterized in that** step e)
e1) is carried out on a first conductor-end group (20a, 20b) while step b) is already being carried out on a second conductor-end group (20b, 20c);
and/or
e2) is carried out for characterizing the welding result; und/or
e3) comprises comparing the at least one size parameter with a predetermined parameter value or parameter value range.

5. Welding method according to any one of the preceding claims
**characterized in**
**that** at least one of the steps a), c) and/or e) comprises at least one or more of the following steps:
a1) position measurement using optical measuring methods;
a2) position measurement using time of flight measurement of reflected radiation;
a3) performing an optical coherence tomography;
a4) alternatingly directing a measuring radiation (44) onto different conductor-end groups (18, 20c, 20b);
a5) measuring spacings or distances in at least two dimensions at the conductor-end group (e18);
a6) measuring a spacing or a distance in the direction of extension of the conductor sections having the conductor ends (16, 16a, 16b);
a7) determining a spacing (46) between the conductor ends (16a, 16b);
a8) measuring a height offset (HV) between the conductor ends (16a, 16b);
a9) determining a cross sectional area of an end section of the conductor-end group (18);
a10) determining a volume of the end section of the conductor-end group (18);
a11) measuring a thickness, a width and/or a height of the end section at the conductor-end group (18);
a12) detecting a change of at least one dimension of the end section of the conductor-end group (18).

6. Welding method according to any one of the preceding claims,
**characterized in that**
step b) and/or step d) and/or step f) comprises at least one or more of the following steps:
b1) directing a welding beam (33) on the conductor-end group (18);
b2) starting of the welding energy input to the conductor-end group (18);
b3) stopping the welding energy input to the conductor-end group (18);
b4) increasing or decreasing the welding energy input to the conductor-end group (18);
b5) changing a beam cross-section of the welding beam (33) at the conductor-end group (18).

7. Welding device (14) for welding conductor ends (16, 16a, 16b) grouped into conductor-end groups (18) of a component (12) for an electrical machine, comprising:
a welding device (30) for the input of welding energy to a conductor-end group (18);
a measuring device (28) for detecting a relative position of a first conductor end (16a) and a second conductor end (16b) of the conductor-end group (18) and
a control device (30) configured for controlling a welding energy input to the conductor ends (16a, 16b) to be welded depending on the detected relative position,
**characterized in that**
the measuring device (28) is configured to detect at least one size parameter of a melt pool (5) produced during welding and that the control device (30) is configured to control the welding energy input depending on the detected size parameter of the melt pool (5).

8. Welding device according to claim 7,
**characterized in that**
the measuring device (28) is configured to detect a cross sectional area, a volume, a thickness, a width and/or a height of the melt pool for detecting said at least one size parameter of the melt pool (5) produced during welding.

9. Welding device (14) according to claim 7 or 8,
**characterized in that**
the measuring device (28) is designed to detect at least one size parameter of a welding bead (27) solidified after welding, and **in that** the control device (30) is designed to control a welding energy input during subsequent welding of a further conductor-end group (18, 20c) as a function of the detected size parameter of the solidified welding bead (27).

10. Welding device (14) according to claim 9,
**characterized in that**
the measuring device (28)
10.1 comprises one or more deflection mirrors (42) by means of which the measuring radiation (44, 44') can be selectively directed to different conductor-end groups (18, 20c, 20b) and which are configured to measure, at a first conductor-end group, the size parameter at a welding bead (27) solidified after welding and at the same time detect the relative position of the conductor ends (16a, 16b) and/or the size parameter of the melt pool (5) already at the second conductor-end group (18, 20c); and/or
10.2 is configured to evaluate the welding result; and/or
10.3 comprises a comparing means for comparing the at least one size parameter with a predetermined parameter value or parameter value range.

11. Welding device (14) according to any one of the preceding claims,
**characterized in that**
the measuring device (28) is selected from a group of measuring devices which comprises:
11.1 a measuring device for position measurement by means of optical measuring methods;
11.2 a measuring device for position measurement by time of flight measurement of reflected radiation;
11.3 a measuring device for carrying out a coherence tomography;
11.4 a measuring device for alternatingly directing a measurement radiation onto different conductor-end groups (18, 20b, 20c);
11.5 a measuring device for measuring spacings or distances in at least two dimensions at the conductor-end groups (18);
11.6 a measuring device for measuring a spacing or a distance in the direction of extension of the conductor sections having the conductor ends (16, 16a, 16b);
11.7 a measuring device for measuring a spacing between the conductor ends (16a, 16b);
11.8 a measuring device for measuring a height offset (HV) between the conductor ends;
11.9 a measuring device for determining a cross sectional area of the end section of the conductor-end group (18);
11.10 a measuring device for determining a volume of the end section of the conductor-end group (18);
11.11 a measuring device for measuring a thickness, a width and/or a height of the end section at the conductor-end group (18);
11.12 a measuring device for detecting a change of at least one dimension of the end section of the conductor-end group (18);
11.13 a combination of one of more of the measuring devices according to 11.1 to 11.12.

12. Welding device (14) according to any one of the preceding claims,
**characterized in that**
the control device (30) is configured to control the welding device (26) for:
b1) directing a welding beam (33) onto the conductor-end group (18); and/or
b2) starting the welding energy input to the conductor-end group (18); and/or
b3) stopping the welding energy input to the conductor-end group (18); and/or
b4) increasing or decreasing the welding energy input to the conductor-end group (18); and/or
b5) changing a beam cross section of a welding beam (33) onto the conductor-end group.

13. Computer program product, containing machine-readable instructions which when loaded into a control device of a welding device (14) according to one of the claims 7 to 12 cause the welding device (14) to perform the welding method according to any one of the claims 1 to 6.

## Revendications

1. Procédé de soudage d'extrémités de conducteurs (16, 16a, 16b) regroupées en groupes d'extrémités de conducteurs (18) d'un composant de machine électrique, comprenant :
a) la détection d'une position relative d'une première extrémité de conducteur (16a) et d'une deuxième extrémité de conducteur (16b) d'un groupe d'extrémités de conducteur (18) et
b) contrôler l'apport d'énergie de soudage aux extrémités du conducteur (16, 16a, 16b) à souder en fonction de la position relative,
**caractérisé par**
c) la détection d'au moins un paramètre de taille d'un bain de fusion (5) produit pendant le soudage et
d) contrôler l'apport d'énergie de soudage en fonction du paramètre de taille du bain de fusion (5).

2. Procédé de soudage selon la revendication 1, **caractérisé en ce que** la détection d'au moins un paramètre de taille du bain de fusion produit pendant le soudage comprend au moins l'une des étapes suivantes:
c9) détermination d'une surface de section transversale du bain de fusion;
c10) détermination d'un volume du bain de fusion; et/ou
c11) mesure de l'épaisseur, de la largeur et/ou de la hauteur du bain de fusion.

3. Procédé de soudage selon la revendication 1 ou 2,
**caractérisé par**
e) la détection d'au moins un paramètre de taille d'un cordon de soudure (27) solidifié après le soudage
f) contrôler l'apport d'énergie de soudage lors d'un soudage ultérieur d'un autre groupe d'extrémités de conducteurs (18, 20c) en fonction du paramètre de taille détecté du cordon de soudure solidifié (27).

4. Procédé de soudage selon la revendication 3,
**caractérisé en ce que** l'étape e)
e1) est réalisée sur un premier groupe d'extrémités de conducteurs (20a, 20b) alors que l'étape b) est déjà réalisée sur un second groupe d'extrémités de conducteurs (20b, 20c);
et/ou
e2) est effectuée pour caractériser le résultat du soudage; et/ou
e3) comprend la comparaison d'au moins un paramètre de taille avec une valeur de paramètre prédéterminée ou une plage de valeurs de paramètres.

5. Procédé de soudage selon l'une quelconque des revendications précédentes **caractérisé en ce**
**qu'**au moins une des étapes a), c) et/ou e) comprend au moins une ou plusieurs des étapes suivantes:
a1) mesure de la position à l'aide de méthodes de mesure optiques;
a2) mesure de la position à l'aide de la mesure du temps de vol du rayonnement réfléchi;
a3) réalisation d'une tomographie par cohérence optique;
a4) diriger alternativement un rayonnement de mesure (44) sur différents groupes d'extrémités de conducteurs (18, 20c, 20b) ;
a5) mesure d'espacements ou de distances dans au moins deux dimensions au niveau du groupe d'extrémités du conducteur (18);
a6) mesure d'un espacement ou d'une distance dans la direction d'extension des sections de conducteur ayant les extrémités de conducteur (16, 16a, 16b);
a7) déterminer un espacement (46) entre les extrémités des conducteurs (16a, 16b);
a8) mesurer un décalage en hauteur (HV) entre les extrémités des conducteurs (16a, 16b);
a9) déterminer une surface de section transversale d'une section d'extrémité du groupe d'extrémités de conducteurs (18) ;
a10) déterminer le volume de la section d'extrémité du groupe d'extrémités de conducteurs (18);
a11) mesurer l'épaisseur, la largeur et/ou la hauteur de la section d'extrémité du groupe d'extrémités de conducteurs (18) ;
a12) détecter un changement d'au moins une dimension de la section d'extrémité du groupe d'extrémités de conducteurs (18).

6. Procédé de soudage selon l'une quelconque des revendications précédentes,
**caractérisé en ce que**
l'étape b) et/ou l'étape d) et/ou l'étape f) comprend au moins une ou plusieurs des étapes suivantes:
b1) diriger un faisceau de soudage (33) sur le groupe d'extrémités du conducteur (18);
b2) démarrage de l'apport d'énergie de soudage au groupe d'extrémités du conducteur (18);
b3) arrêt de l'apport d'énergie de soudage au groupe d'extrémités du conducteur (18);
b4) augmentation ou diminution de l'apport d'énergie de soudage au groupe d'extrémités du conducteur (18);
b5) modifier la section du faisceau de soudage (33) au niveau du groupe d'extrémités du conducteur (18).

7. Dispositif de soudage (14) pour souder les extrémités des conducteurs (16, 16a, 16b) regroupées en groupes d'extrémités de conducteurs (18) d'un composant (12) pour une machine électrique, comprenant:
un dispositif de soudage (30) pour l'apport d'énergie de soudage à un groupe d'extrémités de conducteurs (18);
un dispositif de mesure (28) pour détecter la position relative d'une première extrémité de conducteur (16a) et d'une deuxième extrémité de conducteur (16b) du groupe d'extrémités de conducteur (18) et
un dispositif de commande (30) configuré pour contrôler l'apport d'énergie de soudage aux extrémités du conducteur (16a, 16b) à souder en fonction de la position relative détectée,
**caractérisé en ce que**
le dispositif de mesure (28) est configuré pour détecter au moins un paramètre de taille d'un bain de fusion (5) produit pendant le soudage et que le dispositif de commande (30) est configuré pour commander l'apport d'énergie de soudage en fonction du paramètre de taille détecté du bain de fusion (5).

8. Dispositif de soudage selon la revendication 7,
**caractérisé en ce que**
le dispositif de mesure (28) est configuré pour détecter une surface de section transversale, un volume, une épaisseur, une largeur et/ou une hauteur du bain de fusion pour détecter ledit au moins un paramètre de taille du bain de fusion (5) produit pendant le soudage.

9. Dispositif de soudage (14) selon la revendication 7 ou 8,
**caractérisé en ce que**
le dispositif de mesure (28) est conçu pour détecter au moins un paramètre de taille d'un cordon de soudure (27) solidifiée après le soudage et **en ce que** le dispositif de commande (30) est conçu pour commander un apport d'énergie de soudage lors d'un soudage ultérieur d'un autre groupe d'extrémités de conducteurs (18, 20c) en fonction du paramètre de taille détecté du cordon de soudure (27) solidifiée.

10. Dispositif de soudage (14) selon la revendication 9,
**caractérisé en ce que**
le dispositif de mesure (28)
10.1 comprend un ou plusieurs miroirs de déviation (42) au moyen desquels le rayonnement de mesure (44, 44') peut être dirigé sélectivement vers différents groupes d'extrémités de conducteurs (18, 20c, 20b) et qui sont configurés pour mesurer, sur un premier groupe d'extrémités de conducteurs, le paramètre de taille sur un cordon de soudure (27) solidifié après le soudage et en même temps détecter la position relative des extrémités de conducteurs (16a, 16b) et/ou le paramètre de taille du bain de fusion (5) déjà sur le deuxième groupe d'extrémités de conducteurs (18, 20c); et/ou
10.2 est configuré pour évaluer le résultat du soudage; et/ou
10.3 comprend un moyen de comparaison pour comparer l'au moins un paramètre de taille à une valeur de paramètre prédéterminée ou à une plage de valeurs de paramètres.

11. Dispositif de soudage (14) selon l'une quelconque des revendications précédentes,
**caractérisé en ce que**
le dispositif de mesure (28) est choisi dans un groupe de dispositifs de mesure qui comprend:
11.1 un dispositif de mesure (28) pour la mesure de la position au moyen de méthodes de mesure optiques;
11.2 un dispositif de mesure de la position par mesure du temps de vol du rayonnement réfléchi;
11.3 un dispositif de mesure pour la réalisation d'une tomographie par cohérence;
11.4 un dispositif de mesure pour diriger alternativement un rayonnement de mesure sur différents groupes d'extrémités de conducteurs (18, 20b, 20c);
11.5 un dispositif de mesure pour mesurer des espaces ou des distances dans au moins deux dimensions au niveau des groupes d'extrémités de conducteurs (18);
11.6 un dispositif de mesure pour mesurer un espacement ou une distance dans la direction de l'extension des sections de conducteurs ayant les extrémités de conducteurs (16, 16a, 16b);
11.7 un dispositif de mesure pour mesurer l'espacement entre les extrémités des conducteurs (16a, 16b);
11.8 un dispositif de mesure pour mesurer un décalage en hauteur (HV) entre les extrémités des conducteurs;
11.9 un dispositif de mesure pour déterminer la surface de section transversale de la section d'extrémité du groupe d'extrémités de conducteurs (18);
11.10 un dispositif de mesure pour déterminer le volume de la section d'extrémité du groupe d'extrémités de conducteurs (18);
11.11 un dispositif de mesure pour mesurer l'épaisseur, la largeur et/ou la hauteur de la section d'extrémité du groupe d'extrémités de conducteurs (18);
11.12 un dispositif de mesure pour détecter un changement d'au moins une dimension de la section d'extrémité du groupe d'extrémité des conducteurs (18);
11.13 une combinaison d'un ou plusieurs des dispositifs de mesure selon 11.1 à 11.12.

12. Dispositif de soudage (14) selon l'une quelconque des revendications précédentes,
**caractérisé en ce que**
le dispositif de commande (30) est configuré pour commander le dispositif de soudage (26) pour:
b1) diriger un faisceau de soudage (33) sur le groupe d'extrémités du conducteur (18); et/ou
b2) démarrer l'apport d'énergie de soudage au groupe d'extrémités du conducteur (18); et/ou
b3) arrêter l'apport d'énergie de soudage au groupe d'extrémités des conducteurs (18); et/ou
b4) augmenter ou diminuer l'apport d'énergie de soudage au groupe d'extrémités du conducteur (18); et/ou
b5) modifier la section transversale d'un faisceau de soudage (33) sur le groupe d'extrémités des conducteurs (18).

13. Produit de programme informatique contenant des instructions lisibles par une machine qui, lorsqu'elles sont chargées dans un dispositif de commande d'un dispositif de soudage (14) conformément à l'une des revendications 7 à 12, amènent le dispositif de soudage (14) à exécuter la méthode de soudage conformément à l'une des revendications 1 à 6.
